# EUROPÄISCHE PATENTANMELDUNG

(11) **EP 2 719 270 A1**
(43) Veröffentlichungstag der Anmeldung: **16.04.2014**
(21) Anmeldenummer: 12007613.8
(22) Anmeldetag: 08.11.2012
(51) Int. Cl.: A01C 1/06

(54) **Beschichtungszusammensetzung und deren Verwendung**

(30) Priorität: 11.10.2012 EP 12007073
(71) Anmelder: BYK-Chemie GmbH, 46483 Wesel (DE)
(72) Erfinder: Drewer, Anne, D - 48147 Münster (DE); Hanitzsch, Ninja, D - 46047 Oberhausen (DE); Berkei, Michael, Dr., D - 45721 Haltern am See (DE); Nolte, Ulrich, Dr., D - 47533 Kleve (DE); Tinthoff, Tobias, D - 46397 Bochold (DE); Koch, Ralf, D - 46485 Wesel (DE)
(74) Vertreter: Von Rohr

(57) **Zusammenfassung**

Die Erfindung betrifft eine Saatgut-Beschichtungszusammensetzung, insbesondere zur Ausrüstung von Saatgut (1), vorzugsweise Saatgut (1) in Form von Saatkörnern (2) oder dergleichen, mit mindestens einer antistatischen bzw. elektrisch leitfähigen bzw. elektrodissipativen Beschichtung (3) sowie deren Verwendung.

## Beschreibung

Die vorliegende Erfindung betrifft das technische Gebiet der Beschichtung von Saatgut bzw. von Saatkörnern, insbesondere für den Bereich der Landwirtschaft sowie für den gewerblichen bzw. privaten Bereich des Gartenbaus.

Insbesondere betrifft die vorliegende Erfindung eine Saatgut-Beschichtungszusammensetzung, insbesondere zur Ausrüstung von Saatgut, mit mindestens einer antistatischen bzw. elektrisch leitfähigen bzw. elektrodissipativen Beschichtung.

Darüber hinaus betrifft die vorliegende Erfindung die Verwendung eines zumindest im Wesentlichen metallfreien, vorzugsweise metallfreien, sowie elektrisch leitfähigen Additivs zur Herstellung einer Saatgut-Beschichtungszusammensetzung bzw. Saatgut-Beschichtung sowie die Verwendung eines zumindest im Wesentlichen metallfreien, vorzugsweise metallfreien, und elektrisch leitfähigen Additivs zur antistatischen bzw. elektrisch leitfähigen bzw. elektrodissipativen Ausrüstung von Saatgut bzw. zur dementsprechenden Ausrüstung einer Saatgut-Beschichtung als solche, welche auf das Saatgut aufgebracht ist.

Zudem betrifft die vorliegende Erfindung die Verwendung der erfindungsgemäßen Saatgut-Beschichtungszusammensetzung zur antistatischen bzw. elektrisch leitfähigen bzw. elektrodissipativen Ausrüstung von Saatgut.

Des Weiteren betrifft die vorliegende Erfindung ein Verfahren zur Herstellung der erfindungsgemäßen Saatgut-Beschichtungszusammensetzung, welche antistatische bzw. elektrisch leitfähige bzw. elektrodissipative Eigenschaften aufweist sowie die durch das erfindungsgemäße Verfahren erhältliche Saatgut-Beschichtungszusammensetzung als solche.

Darüber hinaus betrifft die vorliegende Erfindung ein Verfahren zur Herstellung eines mit einer Beschichtung ausgerüsteten Saatguts, insbesondere in Form von Saatkörnern oder dergleichen.

Schließlich betrifft die vorliegende Erfindung auch das erfindungsgemäße Saatgut, insbesondere in Form von Saatkörnern oder dergleichen, welches mit einer antistatischen bzw. elektrisch leitfähigen bzw. elektrodissipativen Beschichtung auf Basis der erfindungsgemäßen Saatgut-Beschichtungszusammensetzung ausgerüstet ist.

Bei Saatgut, welches im Allgemeinen in Form von teilchen- bzw. partikelförmigen Saatkörnern bzw. (Pflanzen-)Samen vorliegt, handelt es sich insbesondere um generative bzw. keimfähige Fortpflanzungsorgane von Pflanzen, welche im Allgemeinen die vollständige, durch Befruchtung entstandene Keimanlage der Pflanze enthalten und sich üblicherweise in einer Keimruhe befinden. Die Keimruhe kann durch spezielle Faktoren, wie Feuchtigkeit, Temperatur, Licht oder dergleichen, unterbrochen werden, was zur anschließenden Keimung des Saatguts mit Ausbildung des Sprösslings bzw. der (Jung-)Pflanze führt.

Im Allgemeinen handelt es sich bei Saatgut, welches beispielsweise in der Landwirtschaft in großen Mengen zur Bestellung von Feldern, aber auch in kleineren Mengen im Bereich des Gartenbaus eingesetzt wird, um ein empfindliches biologisches Material, welches insbesondere bei nicht optimaler Verarbeitung und Lagerung an Qualität bzw. Keimfähigkeit verlieren kann, beispielsweise wenn das Saatgut unter zu warmen, zu feuchten oder aber auch unter zu hellen Bedingungen verarbeitet bzw. gelagert wird.

So kann das Saatgut bei ungünstigen Verarbeitungs- und insbesondere bei ungünstigen Lagerungsbedingungen innerhalb kurzer Zeit verderben bzw. unter Verlust der Keimfähigkeit unbrauchbar werden, wobei die entsprechenden Ausfälle beispielsweise durch eine vorzeitige und damit unerwünschte Keimung oder aufgrund eines Befalls mit Pilzen, Parasiten oder dergleichen hervorgerufen werden können. Die so entstehenden Qualitätseinbußen führen zu einer nicht optimalen Nutzung bzw. Auskeimung des Saatguts, einhergehend mit Ertragsverlusten, und somit auch zu einem finanziellen Ausfall, insbesondere da es sich bei industriell angebotenem Saatgut um ein hochleistungsfähiges und kostenintensives Spezialprodukt handelt. Hohe Verluste an keimungsfähigen Saatkörnern sind aber auch im Hinblick auf weniger kostenintensive Saatgutsorten von Bedeutung, da derartige Sorten oftmals in sehr viel größeren Mengen gelagert werden, was ihre Anfälligkeit gegenüber ungünstigen Umweltfaktoren zusätzlich erhöht.

Vor diesem Hintergrund besteht im Stand der Technik somit ein großer Bedarf, Saatgut mit einer hohen Widerstandskraft und Haltbarkeit bzw. Lagerstabilität auszurüsten, um auf diese Weise optimale Keimungs- und Wachstumseigenschaften zu erhalten.

In diesem Zusammenhang ist im Stand der Technik die Ausrüstung von Saatgut mit einer Beschichtung bzw. Umhüllung bekannt, was im Allgemeinen auch als *Seed Coating* bezeichnet wird.

Die hierzu eingesetzten Beschichtungs- bzw. Hüllzusammensetzungen werden dabei mit unterschiedlichen Stoffen ausgerüstet, welche die Saatgutqualität verbessern sollen, wie beispielsweise Bakterizide oder Fungizide, welche insbesondere die Lagerstabilität von Saatgut, bedingt durch einen verringerten Bakterien- bzw. (Schimmel-)Pilzbefall, verbessern sollen.

Gleichermaßen können die aus dem Stand der Technik bekannten Beschichtungssysteme beispielsweise mit die Keimung bzw. das Wachstum positiv beeinflussenden Substanzen versehen werden, wie beispielsweise Düngemitteln und Vitaminen zum einen, um so die Wachstumsbedingungen hinsichtlich der Nährstoffversorgung zu optimieren, und Herbiziden zum anderen, um so das Wachstum von konkurrierenden Unkräutern oder dergleichen, insbesondere während der Keimungsphase des Saatguts, zu verhindern.

Darüber hinaus werden derartige Beschichtungssysteme für Saatgut auch vor dem Hintergrund eingesetzt, die Masse des Saatguts zu erhöhen bzw. zu vereinheitlichen, um hierdurch insbesondere auch Abfüll-, Dosierungs- und Austragungsprozesse bzw. das Aussähen des Saatguts zu verbessern. Gleicherma-βen werden oftmals Farbstoffe bzw. Farbpigmente eingesetzt, insbesondere um hierdurch eine optische Kennzeichnung des Saatguts zu ermöglichen.

Die WO 2012/118795 A2 bzw. die US 2012/220454 A1 betrifft eine Samenzusammensetzung auf Basis von Polymeren, auf deren Basis die Wasseraufnahme der Beschichtung erhöht werden soll.

Weiterhin betrifft die WO 2007/033931 A1 bzw. die US 2009/270259 A1 ein Verfahren zur Herstellung einer Formulierung mit kontrollierter Wirkstoffabgabe, welche als Saatgutbeschichtung eingesetzt werden kann, wobei die Zusammensetzung gleichermaßen wachstumsfördernde oder biozide Wirkstoffe enthalten kann.

Darüber hinaus betrifft die EP 2 229 808 A1 bzw. die US 2012/065060 A1 ein Beschichtungssystem für Pflanzensamen, welches neben anorganischen Partikeln weitere Inhaltsstoffe, wie wachstumsfördernde Substanzen und biozide Substanzen, enthält. Zudem ist der Einsatz von Farb- bzw. Effektpigmenten beschrieben.

Nachteilig bei bekannten Beschichtungssystemen im Allgemeinen ist oftmals deren nicht optimale Zusammensetzung, insbesondere auch im Hinblick auf umweltspezifische bzw. lebensmittelspezifische Aspekte, was insbesondere auch vor dem Hintergrund gilt, dass im Stand der Technik mitunter metall- bzw. schwermetallhaltige Verbindungen eingesetzt werden, beispielsweise in Form von Farbpigmenten oder dergleichen.

Zudem tragen die im Stand der Technik bekannten Beschichtungssysteme den sowohl bei der insbesondere industriellen Verarbeitung bzw. Handhabung von Saatgut als auch bei dessen Dosierung und Aussaat auftretenden elektrostatischen Effekten und den damit einhergehenden Problemen nicht Rechnung.

Denn die das Saatgut bildenden Saatkörner können sich insbesondere im Rahmen der industriellen Verarbeitung, beispielsweise bei Beschichtungsvorgängen oder aber bei der Verpackung bzw. Portionierung, sowie im Rahmen der Handhabung beim Endverbraucher, beispielsweise bei der Entnahme aus einer Umverpackung bzw. bei der Aussaat, elektrostatisch aufladen, wodurch es zu mitunter schwerwiegenden Problemen, insbesondere bei der Verarbeitung bzw. Portionierung, bei der Entnahme aus einer Verpackung oder aber beim Ausbringen bzw. bei der Aussaat des Saatguts kommen kann.

Der Grund für die elektrostatische Aufladung ist insbesondere in den dielektrischen Eigenschaften des Saatguts sowie in der bei der Verarbeitung bzw. Handhabung auftretenden Bewegung und Reibung des Saatguts zu sehen, was zu einer entsprechende Ladungsseparation mit einhergehender elektrostatischer Aufladung des Saatguts führt.

Aufgrund der elektrostatischen Aufladung des Saatguts können beispielsweise Anziehungskräfte in Bezug auf Verarbeitungs-, Portionierungs- bzw. Vereinzelungsvorrichtungen, Umverpackungen oder dergleichen resultieren, so dass es gewissermaßen zu einem unerwünschten "Kleben" bzw. Anhaften der einzelnen Saatkörner an entsprechenden Bestandteilen bzw. Wandungen von Verarbeitungsmaschinen oder Verpackungen kommen kann. Zudem können aufgrund der elektrostatischen Aufladung beispielsweise auch Abstoßungskräfte insbesondere der Saatkörner untereinander vorliegen, was gleichermaßen unerwünscht ist, beispielsweise im Hinblick auf die Portionierung bzw. Vereinzelung und das Ausbringen des Saatgutes.

Die mit der elektrostatischen Aufladung einhergehenden Effekte treten in besonderem Maße bei Samenkörnern mit geringem Gewicht bzw. geringer Größe auf, sind jedoch gleichermaßen auch bei schwereren bzw. größeren Saatkörnern von Relevanz.

Die auftretenden elektrostatischen Effekte sind insbesondere auch im Rahmen der industriellen Verarbeitung bzw. Handhabung nachteilig, beispielsweise was das Aufbringen von Beschichtungen auf entsprechende Saatkörner anbelangt. Insbesondere ist es aufgrund der auftretenden elektrostatischen Kräfte oftmals nicht möglich, eine gleichmäßige Beschichtung der Saatkörner zu erreichen.

Darüber hinaus ist auch die Rieselfähigkeit des Saatguts durch die elektrostatische Aufladung deutlich verschlechtert, was hinsichtlich der Portionierung bzw. Vereinzelung des Saatguts problematisch ist, was umso schwerer wiegt, als insbesondere in der hochindustrialisierten Landwirtschaft ein effizienter Einsatz des Saatguts nicht zuletzt aus ökonomischen Gründen von großer Bedeutung ist.

Aber auch bei der Anwendung im nichtkommerziellen Bereich, beispielsweise im Bereich des privaten Gartenbaus, sind die im Zusammenhang mit der elektrostatischen Aufladung des Saatguts stehenden Effekte nachteilig, beispielsweise was die Handhabung des Saatguts bei der Entnahme aus einer (Um-)Verpackung oder dergleichen anbelangt, da die einzelnen Saatkörner oftmals an der Verpackung haften bleiben, was unerwünscht ist.

Vor diesem Hintergrund hat es im Stand der Technik bereits erste Ansätze gegeben, entsprechende Maßnahmen umzusetzen, anhand derer den in Rede stehenden elektrostatischen Effekten entgegengewirkt werden soll.

So ist es im Stand der Technik beispielsweise vorgesehen, das Saatgut vor dem Hintergrund mit einer Beschichtung zu versehen, die Masse des Saatguts zu erhöhen. Dies wirkt jedoch einer elektrostatischen Aufladung nicht grundsätzlich entgegen, sondern führt lediglich aufgrund der höheren Masse zu einer gewissen Verringerung der durch die elektrostatische Aufladung bedingten Effekte. Zudem ist bei diesem Konzept nachteilig, dass mitunter übermäßig große Mengen an Material aufgetragen werden müssen, was die Handhabbarkeit des Saatguts insgesamt verschlechtert und beispielsweise aufgrund des höheren Volumens und Gewichts zu höheren Verpackungs- und Transportkosten führt.

Ein weiterer Ansatz im Stand der Technik besteht darin, das Beschichtungssystem durch den Einsatz anorganischer schwermetallhaltiger Verbindungen mit antistatischen Eigenschaften auszurüsten. Diesbezüglich ist im Stand der Technik insbesondere der Einsatz von antimondotierten Zinnoxiden vorgesehen. Nachteilig hierbei ist jedoch zum einen die schlechte Handhabbarkeit, da die in Rede stehende anorganische Verbindung als separate Schicht aufgebracht wird, und zum anderen die durch den Einsatz von schwermetallhaltigen Verbindungen resultierende schlechte Umweltverträglichkeit und mangelnde Lebensmittelkompatibilität.

Ein weiterer Ansatz im Stand der Technik ist in dem Einsatz von speziellen Salzverbindungen auf Basis von Tetraalkylammoniumsalzen zu sehen. Diese weisen aufgrund ihrer polaren Struktur mitunter starke hygroskopische Eigenschaften auf, so dass durch die damit im Zusammenhang stehende Wassereinlagerung in der Schicht eine gewisse Leitfähigkeit resultiert. Diesbezüglich ist jedoch insbesondere nachteilig, dass zu hohe Wassergehalte in der zugrundeliegenden Schicht beispielsweise ein vorzeitiges Keimen des Saatguts induzieren bzw. zu einem Schimmel- bzw. Pilzbefall führen können.

Der vorliegenden Erfindung liegt daher die Aufgabe zugrunde, eine Saatgut-Beschichtungszusammensetzung bzw. ein damit beschichtetes Saatgut bereitzustellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist eine Aufgabe der vorliegenden Erfindung darin zu sehen, eine effiziente antistatische bzw. elektrisch leitfähige Beschichtungszusammensetzung für Saatgut bzw. ein mit einer derartigen Beschichtungszusammensetzung ausgerüstetes Saatgut als solches bereitzustellen, welche bzw. welches antistatische Eigenschaften aufweist, so dass sowohl herstellungs- bzw. verarbeitungstechnische als auch anwendungsspezifische Vorteile resultieren, insbesondere im Hinblick auf eine verbesserte Handhabbarkeit bei der Herstellung der Beschichtung als solche sowie auf die Vereinzelung bzw. Dosierung und das Austragen bzw. Aussähen des Saatguts.

Darüber hinaus besteht eine weitere Aufgabe der vorliegenden Erfindung darin, eine Saatgut-Beschichtungszusammensetzung bzw. ein damit beschichtetes Saatgut bereitzustellen, welches sowohl eine hohe Lebensmittelsicherheit bzw. -kompatibilität als auch eine hohe Umweltverträglichkeit aufweist.

Zudem ist eine weitere Aufgabe der vorliegenden Erfindung darin zu sehen, ein leistungsfähiges Verfahren zur Beschichtung von Saatgut bereitzustellen, welches zu einer effizienten antistatischen Ausrüstung eines auf diese Weise behandelten Saatguts führt, wobei das zugrundeliegende Verfahren gleichermaßen anwendungsfreundlich und kostengünstig sein soll.

Die zuvor geschilderte Aufgabenstellung wird erfindungsgemäß durch eine Saatgut-Beschichtungszusammensetzung nach Anspruch 1 gelöst; weitere, vorteilhafte Weiterbildungen und Ausgestaltungen der erfindungsgemäßen Saatgut-Beschichtungszusammensetzung sind Gegenstand der diesbezüglichen Unteransprüche.

Weiterer Gegenstand der vorliegenden Erfindung ist zudem die erfindungsgemäße Verwendung eines zumindest im Wesentlichen metallfreien, vorzugsweise metallfreien, elektrisch leitfähigen Additivs zur Herstellung einer entsprechenden Saatgut-Beschichtungszusammensetzung bzw. einer entsprechenden Saatgut-Beschichtung gemäß dem diesbezüglichen Verwendungsanspruch.

Darüber hinaus ist Gegenstand der vorliegenden Erfindung die Verwendung der erfindungsgemäßen Saatgut-Beschichtungszusammensetzung zur antistatischen bzw. elektrisch leitfähigen bzw. elektrodissipativen Ausrüstung von Saatgut gemäß dem diesbezüglichen Verwendungsanspruch.

Wiederum weiterer Gegenstand der vorliegenden Erfindung ist das erfindungsgemäße Verfahren zur Herstellung der erfindungsgemäßen Saatgut-Beschichtungszusammensetzung gemäß dem diesbezüglichen Verfahrensanspruch.

In diesem Zusammenhang ist weiterer Gegenstand der vorliegenden Erfindung die auf diese Weise erhältliche Saatgut-Beschichtungszusammensetzung gemäß dem diesbezüglichen, die Zusammensetzung betreffenden Anspruch.

Zudem ist Gegenstand der vorliegenden Erfindung das Verfahren zur Herstellung eines beschichteten Saatguts gemäß dem diesbezüglichen Verfahrensanspruch. Weitere, vorteilhafte Weiterbildungen und Ausgestaltungen des erfindungsgemäßen Verfahrens gemäß diesem Aspekt sind Gegenstand des entsprechenden Unteranspruchs.

Schließlich ist Gegenstand der vorliegenden Erfindung ein Saatgut, welches mit mindestens einer Beschichtung auf Basis der erfindungsgemäßen Saatgut-Beschichtungszusammensetzung ausgerüstet ist, gemäß dem diesbezüglichen, das Saatgut als solches betreffenden Anspruch. Weitere, vorteilhafte Weiterbildungen und Ausgestaltungen des erfindungsgemäßen Saatguts sind Gegenstand der diesbezüglichen Unteransprüche.

Es versteht sich von selbst, dass Ausgestaltungen, Ausführungsformen, Vorteile und dergleichen, welche nachfolgend zu Zwecken der Vermeidung von unnötigen Wiederholungen nur zu einem Erfindungsaspekt ausgeführt werden, selbstverständlich auch in Bezug auf die übrigen Erfindungsaspekte entsprechend gelten.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen wird.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Des Weiteren sind bei der prozentualen Angabe von Mengen eingesetzter Inhaltsstoffe oder dergleichen die mengenmäßigen Anteile derart zu kombinieren, dass insgesamt 100 % bzw. 100 Gew.-% resultieren. Auch dies versteht sich für den Fachmann von selbst.

Dieses vorausgeschickt, wird im Folgenden die Erfindung näher beschrieben. Gegenstand der vorliegenden Erfindung - gemäß einem **ersten** Aspekt der vorliegenden Erfindung - ist somit eine Saatgut-Beschichtungszusammensetzung, insbesondere zur Ausrüstung von Saatgut, vorzugsweise Saatgut in Form von Saatkörnern oder dergleichen, mit mindestens einer antistatischen und/oder elektrisch leitfähigen und/oder elektrodissipativen Beschichtung. Die erfindungsgemäße Saatgut-Beschichtungszusammensetzung zeichnet sich dadurch aus, dass die Beschichtungszusammensetzung mindestens ein zumindest im Wesentlichen metallfreies, vorzugsweise metallfreies, elektrisch leitfähiges Additiv aufweist.

Denn die Anmelderin hat in völlig überraschender Weise herausgefunden, dass der zweckgerichtete Einsatz eines zumindest im Wesentlichen metallfreien, vorzugsweise metallfreien, und gleichzeitig elektrisch leitfähigen Additivs in der erfindungsgemäßen Saatgut-Beschichtungszusammensetzung zu hervorragenden elektrostatischen Eigenschaften des mit der erfindungsgemäßen Beschichtungszusammensetzung beschichteten Saatguts führt, da die erfindungsgemäße Beschichtungszusammensetzung als solche hervorragende antistatische bzw. elektrisch leitfähige bzw. elektrodissipative Eigenschaften aufweist.

Durch die gezielte Ausrüstung von Saatgut mit der erfindungsgemäßen Beschichtungszusammensetzung wird insbesondere eine elektrostatische Aufladung des Saatguts während der Verarbeitung sowie der Anwendung vermieden, was sowohl zu verfahrens- als auch anwendungsspezifischen Vorteilen führt. Denn aufgrund der gezielten Ausrüstung des Saatguts mit den vorgenannten Eigenschaften wird beispielsweise eine durch Bewegung bzw. Reibung des Saatguts hervorgerufene elektrostatische Aufladung des Saatguts vermieden bzw. signifikant verringert, so dass das Saatgut z. B. nicht an Verarbeitungsvorrichtungen bzw. Portionierungsvorrichtungen haftet bzw. "klebt". Zudem ist auf Basis der erfindungsgemäßen Beschichtungszusammensetzung eine gleichmäßige und kontinuierliche Auftragung auf das Saatgut möglich, so dass gleichmäßige Schichtdicken resultieren.

Aufgrund der insgesamt hervorragenden antistatischen Eigenschaften der erfindungsgemäßen Saatgut-Beschichtungszusammensetzung bzw. des damit ausgerüsteten Saatguts ist eine verbesserte Entnahme des Saatguts aus einer (Um-)Verpackung sowie eine hervorragende Vereinzelung im Rahmen der Anwendung bzw. Aussaat möglich. Diese Vorteile sind auch durch die hervorragende Rieselfähigkeit des erfindungsgemäß ausgerüsteten Saatguts bedingt.

Durch die speziellen Eigenschaften der erfindungsgemäßen Beschichtungszusammensetzung, wie zuvor angeführt, wird somit insgesamt eine elektrostatische Aufladung des mit der Beschichtungszusammensetzung ausgerüsteten Saatguts vermieden.

Aufgrund des Einsatzes der erfindungsgemäß angeführten zumindest im Wesentlichen metallfreien, vorzugsweise metallfreien, sowie elektrisch leitfähigen Additive resultieren, insbesondere in Bezug auf die auf ein Saatgut aufgebrachte Beschichtungszusammensetzung, welche sich insbesondere im getrockneten bzw. gehärteten Zustand befindet, gute elektrische Leitfähigkeiten. Vor diesem Hintergrund ist es auch möglich, dünne und gleichmäßige Schichtdicken zu realisieren.

Ein weiterer zentraler Vorteil der erfindungsgemäßen Konzeption ist zudem darin zu sehen, dass das elektrisch leitfähige Additiv zudem zumindest im Wesentlichen metallfrei, vorzugsweise metallfrei, sowie zumindest im Wesentlichen frei, vorzugsweise frei, von Schwermetallen ausgebildet ist. Hierdurch wird zum einen eine hohe Umweltverträglichkeit gewährleistet, und zum anderen werden lebensmittelspezifische Anforderungen durch die erfindungsgemäße Beschichtungszusammensetzung in hohem Maße erfüllt. Insbesondere wird es erfindungsgemäß vermieden, dass Metalle bzw. Schwermetalle in die auskeimende Pflanze inkorporiert und nachfolgend der Nahrungskette zugeführt werden. Die erfindungsgemäße Beschichtungszusammensetzung weist somit eine hohe umwelt- und lebensmittelspezifische Kompatibilität auf.

Zudem ist ein weiterer Vorteil der vorliegenden Erfindung darin zu sehen, dass die erfindungsgemäße Saatgut-Beschichtungszusammensetzung nicht hygroskopisch ist, so dass es insbesondere bei ungünstigen Verarbeitungs- bzw. Lagerungsbedingungen, insbesondere im Hinblick auf eine hohe Umgebungs- bzw. Luftfeuchtigkeit, nicht zu übermäßigen Wassereinlagerungen in die resultierenden Schichtstrukturen kommt. Somit wird einer vorzeitigen Keimung bzw. einem Befall mit (Schimmel-)Pilzen oder dergleichen entgegengewirkt.

Der Begriff "antistatisch", wie er im Rahmen der vorliegenden Erfindung verstanden wird, bezieht sich insbesondere auf eine Unterbindung bzw. Verringerung einer insbesondere durch Reibung entstehenden elektrostatischen Aufladung, insbesondere bedingt durch eine Separation bzw. Trennung entsprechender Ladungsträger, der erfindungsgemäßen Saatgut-Beschichtungszusammensetzung bzw. des damit ausgerüsteten Saatguts. Eine verminderte elektrostatische Aufladung kann unter anderem durch Herbeiführen eines Ladungsausgleichs, beispielsweise durch Kontakt des Saatkorns mit einer entsprechenden, zum Ladungsausgleich fähigen Struktur bzw. durch Ableitung von elektrischen Ladungen erfolgen.

Weiterhin ist unter dem Begriff "elektrisch leitfähig" bzw. "leitfähig", wie er im Rahmen der vorliegenden Erfindung verwendet wird, insbesondere die Fähigkeit der erfindungsgemäßen Saatgut-Beschichtungszusammensetzung bzw. der resultierenden Beschichtung zu verstehen, den elektrischen Strom zu leiten. Wie nachfolgend noch angeführt, resultiert die elektrische Leitfähigkeit dabei insbesondere aus der Verfügbarkeit elektrischer Ladungsträger, insbesondere Elektronen bzw. delokalisierter Elektronen, in dem zugrundeliegenden Beschichtungssystem bzw. in dem erfindungsgemäß eingesetzten Additiv. Der Begriff "elektrisch leitfähig" bzw. "leitfähig", wie er im Rahmen der vorliegenden Erfindung gilt, ist dabei breit zu verstehen und bezieht sich im Allgemeinen auf solche elektrischen Eigenschaften, wie sie gemäß der DIN EN ISO 61340-5-1 unter "statisch ableitend", "statisch leitfähig", "leitfähig" sowie "leitend" zusammengefasst sind. Diesbezüglich kann auch auf nachfolgende Ausführungen verwiesen werden.

Weiterhin ist unter dem Begriff "elektrodissipativ", wie er im Rahmen der vorliegenden Erfindung verwendet wird, insbesondere die Fähigkeit zur Ableitung von elektrischen Ladungen zu verstehen, wodurch eine elektrostatische Aufladung als solche abgebaut bzw. vermieden wird.

Ohne sich auf diese Theorie beschränken zu wollen, werden die vorgenannten Eigenschaften insbesondere dadurch erreicht, dass im Rahmen der vorliegenden Erfindung ein spezielles leitfähiges Additiv verwendet wird, welches der erfindungsgemäßen Beschichtungszusammensetzung zugesetzt ist. Die Beschichtungszusammensetzung kann dabei eine Matrix- bzw. Trägerstruktur aufweisen, in welche das elektrisch leitfähige Additiv inkorporiert ist. Somit wird insgesamt eine leitfähige Struktur bzw. Matrix innerhalb der Saatgut-Beschichtungszusammensetzung nach der Erfindung ausgebildet.

Darüber hinaus ist der Begriff "metallfrei", wie er im Rahmen der vorliegenden Erfindung für das elektrisch leitfähige Additiv verwendet wird, derart zu verstehen, dass das Additiv als solches keine Metall- und/oder Schwermetallionen und insbesondere keine Metall- und/oder Schwermetalloxide oder metalloxidische bzw. schwermetalloxidische Komponenten bzw. Strukturen aufweist. Zudem ist der in Rede stehende Begriff derart zu verstehen, dass das erfindungsgemäß eingesetzte elektrisch leitfähige Additiv auch keine metalldotierten bzw. schwermetalldotierten Verbindungen bzw. Salze umfasst. Hierdurch wird sowohl eine hervorragende Umweltverträglichkeit als auch eine hohe Lebensmittelkompatibilität der erfindungsgemäßen Saatgut-Beschichtungszusammensetzung erreicht.

Weiterhin ist der Begriff "zumindest im Wesentlichen metallfrei", wie er erfindungsgemäß gleichermaßen für das elektrisch leitfähige Additiv verwendet wird, derart zu verstehen, dass das Additiv als solches allenfalls geringe Mengen oder Spuren an Metallen bzw. Metallkomponenten, insbesondere wie zuvor angeführt, aufweisen kann. Insbesondere bezieht sich der in Rede stehende Begriff beispielsweise auf herstellungsbedingte Metallreste in dem Additiv, beispielsweise Katalysatorreste oder dergleichen, und/oder gegebenenfalls vorhandene Metalldotierungen des Additivs. In diesem Zusammenhang kann das elektrisch leitfähige Additiv allenfalls einen Metallgehalt, insbesondere einen Schwermetallgehalt, von höchstens 1 Gew.-%, insbesondere höchstens 0,1 Gew.-%, vorzugsweise höchstens 0,01 Gew.-%, bevorzugt höchstens 0,001 Gew.-%, besonders bevorzugt höchstens 0,0001 Gew.-%, ganz besonders bevorzugt höchstens 0,00001 Gew.-%, bezogen auf das Additiv, aufweisen. Wie zuvor angeführt, wird der zuvor angeführte (sofern überhaupt vorhandene) Metallgehalt insbesondere durch herstellungsbedingte Metallverunreinigungen bzw. Metallreste (z. B. aus Katalysatoren) und/oder durch Metalldotierungen des elektrisch leitfähigen Additivs gebildet.

Gemäß einer erfindungsgemäß bevorzugten Ausführungsform ist das leitfähige Additiv als solches salzfrei, insbesondere ammoniumsalzfrei, und/oder nicht hygroskopisch und/oder frei von Aminogruppen und/oder frei von Ethergruppen. Aufgrund der bevorzugt salzfreien Struktur bzw. den nicht hygroskopischen Eigenschaften des elektrisch leitfähigen Additivs wird insbesondere eine übermäßigen Wassereinlagerung in die auf das Saatgut aufgebrachte getrocknete bzw. ausgehärtete Beschichtungszusammensetzung nach der Erfindung verhindert.

Erfindungsgemäß werden zudem besonders gute antistatische Eigenschaften hinsichtlich der erfindungsgemäßen Beschichtungszusammensetzung erreicht, wenn das leitfähige Additiv ein elektrisch leitfähiges Kohlenstoffallotrop bzw. ein elektrisch leitfähiges Polymer ist.

Denn bei den in Rede stehenden elektrisch leitfähigen Additiven auf Basis von Kohlenstoffallotropen bzw. leitfähigen organischen Polymeren, welche im Nachfolgenden noch weiterführend charakterisiert werden, handelt es sich insbesondere um zumindest im Wesentlichen metallfreie, vorzugsweise metallfreie, Verbindungen, welche aufgrund ihrer speziellen elektrischen Eigenschaften zu der antistatischen Ausrüstung der erfindungsgemäßen Beschichtungszusammensetzung führen und dabei gleichzeitig eine hohe Umweltverträglichkeit aufweisen. Zudem sind die in Rede stehenden Verbindungen insofern vorteilhaft, als diese auch eine hohe Kompatibilität in Bezug auf die weiteren Inhaltsstoffe der erfindungsgemäßen Beschichtungszusammensetzung aufweisen und sich zudem gut in die Beschichtungszusammensetzung inkorporieren bzw. einarbeiten lassen, was zu stabilen Beschichtungszusammensetzungen führt. Aufgrund der hohen Kompatibilität der eingesetzten Additive können zudem zahlreiche weitere spezielle Inhaltsstoffe, wie nachfolgend definiert, eingesetzt werden, so dass insgesamt an die jeweiligen Anwendungsanforderungen angepasste und somit sozusagen maßgeschneiderte Beschichtungszusammensetzungen auf Basis der erfindungsgemäßen Konzeption resultieren.

Darüber hinaus sollte das leitfähige Additiv, insbesondere das leitfähige Kohlenstoffallotrop bzw. das leitfähige Polymer, konjugierte Aromatensysteme bzw. konjugierte Doppelbindungen bzw. konjugierte π-Elektronensysteme aufweisen.

Denn, ohne sich auf diese Theorie beschränken zu wollen, die elektrische Leitfähigkeit des erfindungsgemäß eingesetzten leitfähigen Additivs kann insbesondere auch durch konjugierte Doppelbindungen, also insbesondere durch die alternierende Abfolge von Doppel- und Einfachbindungen ermöglicht werden. In diesen konjugierten Systemen können die p-Orbitale, welche die jeweilige Doppelbindung bilden, mit solchen p-Orbitalen, welche die nachfolgende Doppelbindung bilden, überlappen, so dass die einzelnen π-Bindungen innerhalb dieser konjugierten Systeme nicht mehr lokalisierbar sind und ein sogenanntes delokalisiertes π-Elektronensystem vorliegt. Vorzugsweise sind in den erfindungsgemäß verwendeten leitfähigen Additiven die π-Bindungen über die gesamte Länge des Additivs hinweg delokalisiert, so dass ein quasiein- oder mehrdimensionales elektronisches System vorliegen kann, aus welchem die hohe elektrische Leitfähigkeit der erfindungsgemäß eingesetzten leitfähigen Additive resultiert, und zwar ohne dass diesbezüglich metallische Komponenten oder dergleichen erforderlich sind.

In diesem Zusammenhang sollte das leitfähige Additiv, insbesondere das leitfähige Kohlenstoffallotrop bzw. das leitfähige Polymer, vorzugsweise elektrisch leitfähige Aggregate bzw. elektrisch leitfähige Netzwerke auszubilden imstande sein. Dies kann insbesondere auch infolge der Inkorporation in eine der erfindungsgemäßen Beschichtungszusammensetzung zugrundeliegende Matrixstruktur oder dergleichen erfolgen.

Im Allgemeinen sollte im Rahmen der vorliegenden Erfindung das leitfähige Additiv, insbesondere das leitfähige Kohlenstoffallotrop bzw. das leitfähige Polymer, eine elektrische Leitfähigkeit bzw. Konduktivität im Bereich von 10⁻¹³ bis 10⁵ S/cm, insbesondere 10⁻¹² bis 10⁴ S/cm, vorzugsweise 10⁻¹⁰ bis 10³ S/cm, aufweisen.

Was das leitfähige Additiv, insbesondere das leitfähige Kohlenstoffallotrop bzw. das leitfähige Polymer, vorzugsweise das leitfähige Kohlenstoffallotrop, weiterhin anbelangt, so sollte dieses partikel- und/oder teilchenförmig ausgebildet sein. In diesem Zusammenhang kann das leitfähige Additiv beispielsweise und in nicht beschränkender Weise gekörnt, kugelförmig, gestreckt, plattenförmig, schuppenförmig, zylinderförmig, kegelförmig oder kegelstumpfförmig ausgebildet sein. Derartige Strukturen lassen sich besonders gut in die erfindungsgemäße Beschichtungszusammensetzung unter Gewährleistung einer hohen elektrischen Leitfähigkeit einbringen bzw. inkorporieren.

Auch der diesbezüglichen Teilchengröße des erfindungsgemäß eingesetzten leitfähigen Additiv kommt im Hinblick auf die erfindungsgemäße Beschichtungszusammensetzung eine Bedeutung zu: So sollte das leitfähige Additiv, insbesondere das leitfähige Kohlenstoffallotrop bzw. das leitfähige Polymer, vorzugsweise das leitfähige Kohlenstoffallotrop, eine mittlere Teilchengröße, insbesondere eine mittlere Teilchengröße D50, im Bereich von 0,05 nm bis 1.000 µm, insbesondere 0,1 nm bis 800 µm, vorzugsweise 1 nm bis 600 µm, bevorzugt 10 nm bis 500 µm, aufweisen.

Was die Bestimmung der Teilchengröße im Allgemeinen anbelangt, so kann diese anhand von dem Fachmann an sich wohlbekannten Verfahren vorgenommen werden. Insbesondere können die Teilchengrößen im Allgemeinen mit Bestimmungsverfahren auf Basis von Röntgenbeugung und Laserdiffraktometrie sowie lichtmikroskopisch, elektronenmikroskopisch oder dergleichen bestimmt werden. Insbesondere beziehen sich die zuvor für das leitfähige Additiv im Allgemeinen angeführten Größenangaben auf eine zumindest im Wesentlichen kugelförmige Grundstruktur. Sofern die in Rede stehenden Teilchen bzw. Partikel von einer kugelförmigen Grundstruktur bzw. von einer Kugelform abweichen, können sich die in Rede stehenden Größenangaben auf eine angenommene Kugelform beziehen, welche ein identisches Volumen wie die zugrundeliegenden und von der Kugelform abweichenden Teilchen bzw. Partikel aufweist. Hierzu kann insbesondere auf Rawle, A., "Basic Principles of Particle-Size Analysis", Surface Coatings International, Part A, Issue 2003/02*,* verwiesen werden. Weiterhin wird auf die nachfolgenden Ausführungen zur Größenbestimmung der jeweils weiterführend konkretisierten Additive verwiesen.

Im Folgenden wird das im Rahmen einer erfindungsgemäß bevorzugten Ausführungsform eingesetzte leitfähige Additiv in Form von leitfähigen Kohlenstoffallotropen weiterführend beschrieben.

Gemäß einer bevorzugten Ausführungsform kann in diesem Zusammenhang das erfindungsgemäß eingesetzte leitfähige Kohlenstoffallotrop partikel- bzw. teilchenförmig ausgebildet sein.

Zudem kann das leitfähige Kohlenstoffallotrop, insbesondere bezogen auf die einzelnen Partikel bzw. Teilchen, gekörnt, kugelförmig, gestreckt, plattenförmig, schuppenförmig, zylinderförmig, kegelförmig oder kegelstumpfförmig ausgebildet sein.

Zudem kann das leitfähige Kohlenstoffallotrop eine mittlere Teilchengröße D50 im Bereich von 0,05 nm bis 1.000 µm, insbesondere 0,1 nm bis 800 µm, vorzugsweise 1 nm bis 600 µm, bevorzugt 10 nm bis 500 µm, aufweisen. Diesbezüglich kann auf obige Ausführungen verwiesen werden.

Weiterhin kann das leitfähige Kohlenstoffallotrop, bezogen auf die einzelnen Partikel und/oder Teilchen des Kohlenstoffallotrops, ein Aspektverhältnis, berechnet als Verhältnis der Breite zur Höhe der Partikel und/oder Teilchen, im Bereich von 1 bis 10.000, insbesondere größer als 1, vorzugsweise größer als 10, bevorzugt größer als 100, aufweisen. Dies gilt insbesondere für spezielle, von der Kugelform abweichende, Ausbildungen der in Rede stehenden Kohlenstoffallotrope, wie beispielsweise Kohlenstoffnanoröhren (CNTs).

Erfindungsgemäß kann das Kohlenstoffallotrop ausgewählt sein aus der Gruppe von
(i) gegebenenfalls modifizierten Graphiten, insbesondere zumindest teilweise oxidierten und/oder vollständig oder teilweise interkalierten Graphiten und Blähgraphiten;
(ii) gegebenenfalls modifizierten Graphenen, insbesondere einlagigen oder mehrlagigen Graphenen *(Few Layer Graphenes),* Graphenbändern und dotierten Graphenen;
(iii) Fullerenen, insbesondere C₆₀-Fulleren, C₇₀-Fulleren, C₇₆-Fulleren, C₈₀-Fulleren, C₈₂-Fulleren, C₈₄-Fulleren, C₈₆-Fulleren, C₉₀-Fulleren und C₉₄-Fulleren, vorzugsweise C₆₀-Fulleren und C₇₀-Fulleren;
(iv) gegebenenfalls modifizierten Kohlenstoffnanoröhren (CNTs), insbesondere dotierten und/oder funktionalisierten Kohlenstoffnanoröhren, einwandigen Kohlenstoffnanoröhren (SWCNTs), mehrwandigen Kohlenstoffnanoröhren (MWCNTs), Kohlenstoffnanoröhren mit Bambusstruktur und *cup-stacked* Kohlenstoffnanoröhren (CSCNTs);
(v) Leitrußen *(Carbon Black),* insbesondere *Conductive Carbon Black;*
(vi) Kohlenstofffasern;
(vii) gegebenenfalls modifizierten *Carbon Nanohorns* (CNHs), insbesondere einwandigen, doppelwandigen und mehrwandigen *Carbon Nanohorns;*
(viii) *Carbon Nanocones* (CNCs);
(ix) *Onion-Like Carbons* (OLCs); und
   deren Kombinationen oder Mischungen.

Gemäß einer erfindungsgemäß bevorzugten Ausführungsform können als leitfähige Kohlenstoffallotrope somit insbesondere Graphite, Graphene, Fullerene, Kohlenstoffnanoröhren (CNTs) und/oder Leitruße eingesetzt sein. Insbesondere können als leitfähige Kohlenstoffallotrope Kohlenstoffnanoröhren (CNTs) und/oder Leitruße eingesetzt sein.

Die erfindungsgemäß eingesetzten leitfähigen Kohlenstoffallotrope können optional funktionalisiert sein. Derartige Funktionalisierungen sind dem Fachmann grundsätzlich bekannt, so dass es diesbezüglich keiner weiterführenden Ausführungen bedarf.

Was (i) die gegebenenfalls modifizierten Graphite im Speziellen anbelangt, so können diese eine mittlere Teilchengröße, insbesondere eine mittlere Teilchengröße D50, bezogen auf die Breite der einzelnen Graphitpartikel, im Bereich von 0,01 µm bis 100 µm, insbesondere 0,1 µm bis 50 µm, vorzugsweise 1 µm bis 30 µm, aufweisen.

Bei den erfindungsgemäß eingesetzten Graphiten kann es sich zudem um natürliche oder künstliche Graphite handeln. In diesem Zusammenhang können die gegebenenfalls modifizierten Graphite eine mittlere Teilchengröße, insbesondere eine mittlere Teilchengröße D50, bezogen auf die Höhe der einzelnen Graphitpartikel, im Bereich von 0,5 nm bis 1.000 nm, insbesondere 1 nm bis 500 nm, vorzugsweise 5 nm bis 100 nm, aufweisen. Die Höhe bezieht sich dabei insbesondere auf die Erstreckung senkrecht zu den entsprechenden Kohlenstoffschichten bzw. Basalebenen des Graphits.

Darüber hinaus können (i) die gegebenenfalls modifizierten Graphite eine spezifische Oberfläche (BET-Oberfläche) im Bereich von 10 m²/g bis 2.000 m²/g, insbesondere 15 m²/g bis 1.800 m²/g, vorzugsweise 20 m²/g bis 1.700 m²/g, bevorzugt 50 m²/g bis 1.600 m²/g, aufweisen.

Die Bestimmung der spezifischen Oberfläche gemäß BET ist dem Fachmann grundsätzlich als solches bekannt. Sämtliche BET-Oberflächenangaben können gemäß der DIN ISO 9277:2003-05, "Bestimmung der spezifischen Oberfläche von Feststoffen durch Gasadsorption nach dem BET-Verfahren (ISO 9277:1995)" bestimmt werden. In Bezug auf weitergehende Einzelheiten zur Bestimmung der BET-Oberfläche bzw. zu der BET-Methode kann auf Römpp Chemielexikon, 10. Auflage, Georg Thieme-Verlag, Stuttgart/New York, Stichwort: "BET-Methode", einschließlich der dort referierten Literatur, und auf Winnacker-Küchler (3. Auflage), Band 7, Seiten 93 ff., sowie auf Z. Anal. Chem., 238, Seiten 187-193 (1968), verwiesen werden. Zudem kann verwiesen werden auf die wissenschaftliche Publikation gemäß S. Brunnauer, P. H. Emmett, E. Teller: "Adsorption of gases on multimolecular layers", Journal of the American Chemical Society, 60, Nr. 2, 1938, Seiten 309 bis 319.

Darüber hinaus können (ii) die gegebenenfalls modifizierten Graphene im Speziellen in Form von mehrlagigen Graphenen eingesetzt sein. Diesbezüglich können die Graphene bis zu 100 Lagen, insbesondere 1 bis 100 Lagen, vorzugsweise 1 bis 50 Lagen, bevorzugt 1 bis 30 Lagen, besonders bevorzugt 1 bis 20 Lagen, ganz besonders bevorzugt 1 bis 10 Lagen, aufweisen.

Die erfindungsgemäß eingesetzten (i) Graphite sowie (ii) Graphene können, unabhängig voneinander, eine Ölabsorption im Bereich von 10 bis 750 ml/100 g, insbesondere 15 bis 600 ml/100 g, vorzugsweise 20 bis 500 ml/100 g, aufweisen.

Die Ölabsortionszahl (*Oil Absorption Number,* OAN) kann im Allgemeinen insbesondere auf Basis der ISO 4656:2012 bestimmt werden. Die korrespondierende ASTM-Methode ist die ASTM D2414.

Die Bestimmung der Größe von (i) einzelnen Graphitteilchen bzw. von (ii) einzelnen Graphenteilchen ist insbesondere über elektronenmikroskopische Experimente zugänglich. Da es sich bei der Elektronenmikroskopie um ein abbildendes Verfahren handelt, können einzelne Partikel entsprechend vermessen werden.

Was weiterhin die erfindungsgemäß eingesetzten (iii) Fullerene im Speziellen anbelangt, so können diese einen Teilchendurchmesser im Bereich von 7 Å bis 15 Å aufweisen. Der Teilchendurchmesser von 7 Å bezieht sich dabei insbesondere auf das C₆₀-Fulleren. Höhere Fullerene weisen einen entsprechend größeren Durchmesser auf.

Was die erfindungsgemäß eingesetzten (iv) Kohlenstoffnanoröhren (CNTs) im Speziellen anbelangt, so können diese in Form von einwandigen Kohlenstoffnanoröhren (SWCNTs) bzw. mehrwandigen Kohlenstoffnanoröhren (MWNTs) eingesetzt sein. In diesem Zusammenhang können die mehrwandigen Kohlenstoffnanoröhren (MWNTs) ausgewählt sein aus 2- bis 30-wandigen, vorzugsweise 3- bis 15-wandigen Kohlenstoffnanoröhren. Weiterhin können (iv) die eingesetzten Kohlenstoffnanoröhren (CNTs) mittlere Innendurchmesser im Bereich von 0,4 bis 50 nm, insbesondere im Bereich von 1 bis 10 nm, vorzugsweise im Bereich von 2 bis 6 nm, aufweisen. Zudem können die eingesetzten Kohlenstoffnanoröhren (CNTs) mittlere Außendurchmesser im Bereich von 1 bis 60 nm, insbesondere im Bereich von 5 bis 30 nm, vorzugsweise im Bereich von 10 bis 20 nm, aufweisen. Weiterhin können die eingesetzten Kohlenstoffnanoröhren (CNTs) mittlere Längen im Bereich von 0,01 bis 1.000 µm, insbesondere im Bereich von 0,1 bis 500 µm, vorzugsweise im Bereich von 0,5 bis 200 µm, besonders bevorzugt im Bereich von 1 bis 100 µm, aufweisen.

Insbesondere kann die Größenbestimmung der erfindungsgemäß eingesetzten Kohlenstoffnanoröhren (CNTs) auf Basis einer elektronenmikroskopischen Vermessung von vereinzelten Röhren erfolgen. Zudem kann auch die BET-Methode zur Größenbestimmung unterstützend herangezogen werden.

Was die erfindungsgemäß eingesetzten Kohlenstoffnanoröhren (CNTs) weiterhin anbelangt, so sollten diese eine spezifische elektrische Leitfähigkeit von mindestens 10³ S/cm, insbesondere mindestens 0,5•10⁴ S/cm, bevorzugt mindestens 10⁴ S/cm, aufweisen.

Was weiterhin (v) die erfindungsgemäß eingesetzten Leitruße *(Carbon Black)* im Speziellen anbelangt, so zeichnen sich diese insbesondere dadurch aus, dass diese in Form von Aggregaten aus einer Vielzahl einzelner Partikel vorliegen können. Dabei können die Aggregate weitverzweigte Strukturen ausbilden, was letzten Endes zu der elektrischen Leitfähigkeit der Leitruße führt.

Insbesondere können (v) die Leitruße (*Carbon Black),* insbesondere die Primärpartikel des Leitrußes, eine mittlere Teilchengröße, insbesondere eine mittlere Teilchengröße D50, im Bereich von 1 nm bis 1.000 nm, insbesondere 10 nm bis 800 nm, vorzugsweise 50 nm bis 500 nm, aufweisen. In diesem Zusammenhang beziehen sich die oben angeführten Teilchendurchmesser der in Rede stehenden Leitruße auf die einzelnen Teilchen bzw. Primärpartikel der Aggregate ausbildenden Leitruße. Die Größenbestimmung kann insbesondere auf Basis einer elektronenmikroskopischen Vermessung erfolgen.

Zudem können (v) die Leitruße *(Carbon Black)* eine spezifische Oberfläche (BET-Oberfläche) im Bereich von 10 m²/g bis 2.000 m²/g, insbesondere 15 m²/g bis 1.800 m²/g, vorzugsweise 20 m²/g bis 1.700 m²/g, bevorzugt 50 m²/g bis 1.600 m²/g, aufweisen.

Schließlich können (v) die Leitruße *(Carbon Black)* eine Ölabsorption im Bereich von 10 bis 500 ml/100 g, insbesondere 15 bis 450 ml/100 g, vorzugsweise 20 bis 400 ml/100 g, aufweisen. Die Bestimmung der Ölabsorption kann gleichermaßen auf Basis der ISO 4656:2012 bzw. der ASTM D2414 erfolgen.

Was die erfindungsgemäß eingesetzten (vi) Kohlenstofffasern im Speziellen anbelangt, so können diese einen mittleren Faserdurchmesser, insbesondere einen mittleren Faserdurchmesser D50, im Bereich von 1 µm bis 20 µm, insbesondere 2 µm bis 15 µm, vorzugsweise 3 µm bis 10 µm, aufweisen. Insbesondere können die Kohlenstofffasern eine mittlere Faserlänge, insbesondere eine mittlere Faserlänge D50, im Bereich von 20 µm bis 500 µm, insbesondere 30 µm bis 400 µm, vorzugsweise 50 µm bis 300 µm, aufweisen. Die Größenbestimmung der Kohlenstofffasern kann beispielsweise durch elektronenmikroskopische Analysen erfolgen. Zudem kann auch die BET-Methode zur Größenbestimmung herangezogen werden.

Was die erfindungsgemäß eingesetzten (vi) Kohlenstofffasern zudem anbelangt, so können diese einen mittleren Faserdurchmesser, insbesondere einen mittleren Faserdurchmesser D50, im Bereich von 1 µm bis 20 µm, insbesondere 2 µm bis 15 µm, vorzugsweise 3 µm bis 10 µm, aufweisen. Insbesondere können die Kohlenstofffasern eine mittlere Faserlänge, insbesondere eine mittlere Faserlänge D50, im Bereich von 20 µm bis 500 µm, insbesondere 30 µm bis 400 µm, vorzugsweise 50 µm bis 300 µm, aufweisen.

Schließlich können (vi) die Kohlenstofffasern einen spezifischen elektrischen Widerstand ρ im Bereich von 10⁻³ Ω·m bis 10⁻⁷ Ω·m, insbesondere 10⁻⁴ Ω·m bis 10⁻⁶ Ω·m, aufweisen.

Was weiterhin (vii) die *Carbon Nanohorns* (CNHs) im Speziellen anbelangt, so können diese mittlere Längen im Bereich von 10 bis 100 nm, insbesondere im Bereich von 20 bis 80 nm, vorzugsweise im Bereich von 40 bis 50 nm, aufweisen. Weiterhin können die *Carbon Nanohorns* (CNHs) mittlere Durchmesser im Bereich von 0,5 bis 10 nm, insbesondere im Bereich von 1 bis 8 nm, vorzugsweise im Bereich von 1,5 bis 5 nm, besonders bevorzugt im Bereich von 2 bis 3 nm, aufweisen. Insbesondere können die *Carbon Nanohorns* (CNHs) eine spezifische Oberfläche (BET-Oberfläche) im Bereich von 10 m²/g bis 1.500 m²/g, insbesondere 15 m²/g bis 1.000 m²/g, vorzugsweise 20 m²/g bis 800 m²/g, bevorzugt 50 m²/g bis 500 m²/g, aufweisen. Bezüglich der jeweiligen Bestimmungsverfahren kann auf obige Ausführungen verwiesen werden.

Was darüber hinaus (viii) die *Carbon Nanocones* (CNCs) im Speziellen anbelangt, so können diese eine zumindest im Wesentlichen konische Form aufweisen und/oder kegelförmig ausgebildet sein. Insbesondere kann das Verhältnis des Grundflächendurchmessers zur Höhe der *Carbon Nanocones* (CNCs) im Bereich von 1 liegen.

Zudem können (ix) die *Onion-like Carbons* (OLCs) zumindest im Wesentlichen kugelförmig sein. Zudem können (ix) die *Onion-like Carbons* (OLCs) mittlere Teilchengrößen, insbesondere mittlere Teilchengrößen D50, im Bereich von 5 nm bis 50 nm, insbesondere 5 nm bis 30 nm, vorzugsweise 10 nm bis 20 nm, aufweisen. Bezüglich der Bestimmungsverfahren kann gleichermaßen auf obige Ausführungen verwiesen werden.

Im Folgenden werden die gemäß einer weiteren erfindungsgemäß bevorzugten Ausführungsform als leitfähige Additive eingesetzten Polymere beschrieben:
Was die leitfähigen Polymere, welche synonym auch als elektrisch selbstleitende Polymere bezeichnet werden können, anbelangt, so stellen diese im Allgemeinen Kunststoffe mit elektrischer Leitfähigkeit dar.

Im Rahmen einer erfindungsgemäß bevorzugten Ausführungsform kann das leitfähige Polymer ausgewählt sein aus der Gruppe von Polyacetylenen, Polyanilinen, Polyparaphenylenen, Polystyrolen, Polythiophenen, Polyethylendioxythiophenen (PEDOT), Polyethylendioxythiophenen : Polystyrolsulfonaten (PEDOT : PSS) und Polyphenylenvinylenen, insbesondere Polyacetylenen, Polyanilinen, Polyparaphenylenen, Polystyrolen und Polythiophenen. Die Leitfähigkeit der erfindungsgemäß verwendeten leitfähigen Polymere kann maßgeblich durch eine Dotierung der Polymere mittels gezielter chemischer Funktionalisierung gesteuert werden, so dass durch die entsprechende Dotierung die gewünschte Leitfähigkeit maßgeschneidert eingestellt werden kann. Die Dotierung kann entweder durch direkte chemische Funktionalisierung, wie Oxidation oder Inkorporation von Halogenatomen, oder durch Addition eines weiteren leitfähigen Polymers, wie im Falle des Polyethylendioxythiophen : Polystyrolsulfonats (PEDOT : PSS), in welchem das Polystyrolsulfonat als Dotierungsmittel dient, erfolgen.

Darüber hinaus kann erfindungsgemäß auch sulfoniertes Polyanilin als leitfähiges Polymer eingesetzt sein, welches ebenfalls eine hohe Leitfähigkeit sowie Wasserlöslichkeit aufweist. Zudem ist es unlöslich in mit Wasser mischbaren organischen Lösungsmitteln wie Alkoholen, was zu einer Dispergierung des sulfonierten Polyanilins als feine Partikel in der Beschichtungszusammensetzung und somit zu einem verbesserten antistatischen Effekt der Beschichtungszusammensetzung führt.

Was im Allgemeinen die Bestimmung der Leitfähigkeit bzw. des elektrischen Widerstands der in Rede stehenden elektrisch leitfähigen Additive anbelangt, so kann diese beispielsweise auch mittels Impedanzspektroskopie ermittelt werden, was dem Fachmann grundsätzlich bekannt ist.

Was die erfindungsgemäße Beschichtungszusammensetzung darüber hinaus anbelangt, so hat es sich als besonders vorteilhaft erwiesen, wenn das diesbezüglich eingesetzte leitfähige Additiv ausgewählt ist aus der Gruppe von Leitrußen *(Carbon Black),* Graphiten, Graphenen, leitfähigen Polymeren, Kohlenstoffnanotubes (CNTs), Fullerenen sowie deren Kombinationen.

Was die Menge an leitfähigen Additiven in der erfindungsgemäßen Beschichtungszusammensetzung anbelangt, so kann diese in weiten Bereichen variieren. Die jeweils in den Beschichtungszusammensetzungen nach der Erfindung enthaltene Menge an leitfähigen Additiven ist dabei vom jeweiligen Anwendungszweck, den Auftragungsbedingungen und den verwendeten Materialien abhängig. Besonders gute Ergebnisse hinsichtlich der antistatischen Eigenschaften werden erhalten, wenn die Beschichtungszusammensetzung das leitfähige Additiv, insbesondere das elektrisch leitfähige Kohlenstoffallotrop und/oder das elektrisch leitfähige Polymer, in Mengen im Bereich von 0,0001 Gew.-% bis 70 Gew.-%, insbesondere 0,001 Gew.-% bis 60 Gew.-%, vorzugsweise 0,01 Gew.-% bis 50 Gew.-%, bevorzugt 0,1 Gew.-% bis 40 Gew.-%, besonders bevorzugt 0,2 Gew.-% bis 20 Gew.-%, ganz besonders bevorzugt 0,5 Gew.-% bis 15 Gew.-%, noch weiter bevorzugt 1 Gew.-% bis 10 Gew.-%, bezogen auf die Zusammensetzung, aufweist.

Was die Beschichtungszusammensetzung nach der Erfindung als solche weiterhin anbelangt, so kann diese als Dispersion, vorzugsweise als wässrige bzw. wässrig basierte Dispersion, und/oder als Solubilisat, insbesondere wässriges bzw. wässrig basiertes Solubilisat, vorliegen. In diesem Zusammenhang kann das leitfähige Additiv, insbesondere das elektrisch leitfähige Kohlenstoffallotrop bzw. das elektrisch leitfähige Polymer, in eine kontinuierliche Phase bzw. in mindestens ein Trägermedium, insbesondere Dispersionsmittel bzw. Solubilisierungsmittel, eingebracht sein. Erfindungsgemäß ist es vorzugsweise vorgesehen, dass die Beschichtungszusammensetzung als Dispersion, vorzugsweise als wässrige bzw. wässrig basierte Dispersion, ausgebildet ist. Zudem kann Erfindungsgemäß das leitfähige Additiv, insbesondere das elektrisch leitfähige Kohlenstoffallotrop bzw. das elektrisch leitfähige Polymer, vorzugsweise das elektrisch leitfähige Polymer, zumindest teilweise in der Beschichtungszusammensetzung, insbesondere in dem Dispersionsmittel bzw. Solubilisierungsmittel, gelöst bzw. solubilisiert vorliegen. In diesem Zusammenhang kann das Dispersionsmittel bzw. Solubilisierungsmittel gleichermaßen als Lösemittel fungieren.

Unter einer Dispersion ist im Rahmen der vorliegenden Erfindung insbesondere ein Gemisch von mindestens zwei deutlich voneinander abgegrenzten Phasen zu verstehen, welche sich nicht oder aber zumindest im Wesentlichen nicht ineinander lösen. Insbesondere ist in Dispersionen mindestens eine Phase, nämlich die dispergierte oder diskontinuierliche Phase, möglichst fein in einer anderen Phase, d.h. der kontinuierlichen Phase bzw. dem Trägermedium bzw. Dispersionsmittel, verteilt. Dispersionen können im Allgemeinen als Mischungen von festen Phasen (fest/fest), festen und flüssigen Phasen (fest/flüssig und flüssig/fest) sowie Mischungen von gasförmigen Phasen mit festen oder flüssigen Phasen (flüssig/gasförmig, gasförmig/flüssig oder fest/gasförmig), ausgebildet sein. Im Rahmen der vorliegenden Erfindung werden allgemein Fest/Flüssig-Systeme eingesetzt, wobei eine feste Phase in einem flüssigen Trägermedium bzw. Dispersionsmittel dispergiert ist; erfindungsgemäß ist grundsätzlich auch die Verwendung von Fest/Fest-Dispersionen möglich. Zum Begriff der Dispersion, wie er im Rahmen der vorliegenden Erfindung verwendet wird, kann insbesondere auf die DIN 53900 (Juli 1972) verwiesen werden.

Unter dem Begriff des Solubilisats sind im Rahmen der vorliegenden Erfindung im weitesten Sinne Lösungen von Stoffen bzw. Verbindungen, insbesondere von Makromolekülen, zu verstehen, welche im Allgemeinen ohne den Zusatz von Hilfsstoffen bzw. Additiven nicht in dem betreffenden Trägermedium bzw. Lösemittel löslich sind. Zum Lösen bzw. Solubilisieren dieser Stoffe ist insbesondere die Verwendung eines Lösungsvermittlers vorteilhaft, welcher die Löseeigenschaften des Trägermediums bzw. Lösemittels beeinflusst und/oder beispielsweise die Löslichkeit des betreffenden chemischen Stoffs bzw. der betreffenden chemischen Verbindung - wie im Fall einer Mizellenbildung durch Tenside - erhöht.

Im Rahmen der vorliegenden Erfindung kann als kontinuierliche Phase und/oder Trägermedium, insbesondere als Dispersionsmittel und/oder Solubilisierungsmittel, ein wässrig, organisch oder wässrig-organisch basiertes Trägermedium, insbesondere Dispersionsmittel und/oder Solubilisierungsmittel, bevorzugt ein wässrig oder wässrig organisches Trägermedium, besonders bevorzugt ein wässrig basiertes Trägermedium, eingesetzt sein.

Insbesondere kann als kontinuierliche Phase und/oder Trägermedium ein unter Dispergier- und/oder Solubilisierungsbedingungen, insbesondere unter Atmosphärendruck (101,325 kPa) und in einem Temperaturbereich von 10 bis 100 °C, vorzugsweise 15 bis 70 °C, im flüssigen Aggregatzustand vorliegendes Trägermedium eingesetzt sein.

Insbesondere kann das Trägermedium, insbesondere das Dispersionsmittel bzw. das Solubilisierungsmittel, ausgewählt sein aus der Gruppe von (i) Wasser; (ii) Alkoholen, insbesondere geradkettigen, verzweigten oder cyclischen, einwertigen oder mehrwertigen Alkoholen; (iii) Etheralkoholen; (iv) Kohlenwasserstoffen; (v) Ethern; (vi) Carbonsäureestern; (vii) Etherestern; (viii) Lactonen; (ix) Weichmachern, insbesondere Phthalaten; (x) Aldehyden und Ketonen; (xi) Säureamiden, (xii) N-Methylpyrrolidon; sowie Kombinationen der vorgenannten Trägermedien.

Gleichermaßen kann im Rahmen der vorliegenden Erfindung das Dispersionsmittel bzw. Solubilisierungsmittel Wasser enthalten. Im Rahmen einer erfindungsgemäß bevorzugten Ausführungsform sollte das Dispersionsmittel bzw. das Solubilisierungsmittel Wasser sein.

Insbesondere können im Rahmen der vorliegenden Erfindung auch Mischungen von Dispersionsmitteln bzw. Solubilisierungsmitteln eingesetzt werden, beispielsweise können die unter (ii) bis (xii) genannten Dispersionsmittel bzw. Solubilisierungsmittel gewissermaßen als Co-Dispergiermittel bzw. Co-Solubilisierungsmittel gemeinsam mit Wasser eingesetzt sein. Insbesondere sollte das diesbezüglich eingesetzte Co-Dispergiermittel bzw. Co-Solubilisierungsmittel für diesen Fall in Wasser löslich bzw. dispergierbar sein. Beispielsweise können als Co-Dispergiermittel bzw. Co-Solubilisierungsmittel wasserlösliche organische Lösungsmittel eingesetzt werden, wie Methanol, Ethanol, Isopropanol und/oder Propanol.

Erfindungsgemäß kann die Beschichtungszusammensetzung das Trägermedium, insbesondere das Dispersionsmittel bzw. das Solubilisierungsmittel, in Mengen im Bereich von 0,1 Gew.-% bis 99 Gew.-%, insbesondere 1 Gew.-% bis 95 Gew.-%, vorzugsweise 5 Gew.-% bis 90 Gew.-%, bevorzugt 10 Gew.-% bis 80 Gew.-%, besonders bevorzugt 20 Gew.-% bis 60 Gew.-%, bezogen auf die Zusammensetzung, enthalten.

Insbesondere kann die Beschichtungszusammensetzung das Trägermedium, insbesondere das Dispersionsmittel und/oder das Solubilisierungsmittel, in Mengen im Bereich von 10 Gew.-% bis 1.000 Gew.-%, insbesondere 25 Gew.-% bis 500 Gew.-%, vorzugsweise 50 Gew.-% bis 400 Gew.- %, bevorzugt 75 Gew.-% bis 350 Gew.-%, besonders bevorzugt 100 Gew.-% bis 300 Gew.-%, ganz besonders bevorzugt 150 Gew.-% bis 250 Gew.-%, bezogen auf das leitfähige Additiv, insbesondere das elektrisch leitfähige Kohlenstoffallotrop bzw. das elektrisch leitfähige Polymer, enthalten.

Was das Dispersionsmittel bzw. das Solubilisierungsmittel als solches anbelangt, so kann dieses aus der Beschichtungszusammensetzung insbesondere im Rahmen der Trocknung bzw. Aushärtung der auf das Saatgut aufgebrachten Beschichtungszusammensetzung nach der Erfindung im Wesentlichen vollständig entfernt werden, beispielsweise durch Lufttrocknung oder dergleichen.

Darüber hinaus kann die Beschichtungszusammensetzung mindestens ein Dispergiermittel und/oder Netzmittel, insbesondere ein polymeres Dispergiermittel und/oder Netzmittel, vorzugsweise auf Basis eines funktionalisierten Polymers, vorzugsweise mit einer zahlenmittleren Molekularmasse von mindestens 500 g/mol, vorzugsweise mindestens 1.000 g/mol, bevorzugt mindestens 2.000 g/mol, enthalten.

In diesem Zusammenhang kann das Dispergiermittel ausgewählt sein aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder versalzten Polyaminen, Phosphorsäureestern, Ethoxylaten, Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen Polyestern, Polyphosphaten sowie deren Kombinationen. Auf Basis des erfindungsgemäß eingesetzten Dispergier- bzw. Netzmittels können stabile Dispersionen bzw. Solubilitsate der eingesetzten leitfähigen Additive erhalten werden, wobei insbesondere auch der Gehalt an leitfähigem Additiv in der Beschichtungszusammensetzung nach der Erfindung weiter erhöht werden kann.

Der Begriff des Dispergiermittels - synonym auch als Netzmittel, Dispergator, Dispergieradditiv etc. bezeichnet -, wie er im Rahmen der vorliegenden Erfindung verwendet wird, bezeichnet im Allgemeinen Substanzen, welche das Dispergieren von Teilchen in einem Trägermedium bzw. Dispersionsmittel erleichtern, -insbesondere indem die Grenzflächenspannung zwischen den beiden Komponenten - zu dispergierende Teilchen einerseits und Dispergiermittel andererseits - erniedrigt wird, also eine Benetzung herbeigeführt wird. Infolge dessen sind eine Vielzahl von synonymen Bezeichnungen für Dispergiermittel (Dispergatoren) in Gebrauch, z. B. Dispergieradditiv, Absetzverhinderungsmittel, Netzmittel, Detergens, Suspendier- bzw. Dispergierhilfsmittel, Emulgator etc. Der Begriff des Dispergiermittels ist nicht zu verwechseln mit dem Begriff des Dispersionsmittels, weil letzteres die kontinuierliche Phase bzw. das Trägermedium der Dispersion (d. h. das flüssige, kontinuierliche Dispersionsmedium) bezeichnet.

Für weitergehende Einzelheiten zu den Begriffen "Dispergens", "dispergieren", "Dispergiermittel", "disperse Systeme" und "Dispersion" kann beispielsweise auf Römpp Chemielexikon, 10. Auflage, Georg Thieme-Verlag, Stuttgart/New York, Band 2, 1997, Seiten 1014/1015 sowie auf die dort referierte Literatur, deren Gesamtoffenbarungsgehalt bzw. Inhalt hiermit durch Bezugnahme eingeschlossen ist, verwiesen werden.

Was die Bestimmung des Molekulargewichts der eingesetzten Dispergier- bzw. Netzmittel anbelangt, so kann diese anhand einer GPC-Methode durchgeführt werden, insbesondere auf Basis der DIN 55672 mit Polymethylmethacrylat bzw. Polystyrol als Standard.

Darüber hinaus können als erfindungsgemäß geeignete Dispergiermittel grundsätzlich sämtliche, dem Fachmann zu diesem Zweck bekannten Netzmittel, Tenside, Dispergiermittel etc. verwendet werden.

In erfindungsgemäß bevorzugter Weise werden als Dispergiermittel insbesondere solche Verbindungen ausgewählt, wie sie in den Druckschriften EP 1 593 700 B1, EP 0 154 678 B1, EP 0 318 999 B1, EP 0 270 126 B1, EP 0 893 155 B1, EP 0 417 490 B1, EP 1 081 169 B1, EP 1 650 246 A1, EP 1 486 524 A1, EP 1 640 389 A1, EP 0 879 860 B1, WO 2005/097872 A1 und EP 1 416 019 A1 beschrieben sind, deren jeweiliger Offenbarungsgehalt hiermit in vollem Umfang durch Bezugnahme eingeschlossen ist. Diese Verbindungen sind in den Ansprüchen 14 bis 19 (= EP 1 593 700 B1), Anspruch 20 (= EP 0 154 678 B1), Anspruch 21 (= EP 0 318 999 B1), Anspruch 22 (= EP 0 270 126 B1), Anspruch 23 (= EP 0 893 155 B1), Anspruch 24 (= EP 0 417 490 B1), Anspruch 25 (= EP 1 081 169 B1), Anspruch 26 (= EP 1 650 246 A1), Anspruch 27 (= EP 1 486 524 A1), Anspruch 28 (= EP 1 640 389 A1), Anspruch 29 (= EP 0 879 860 B1), Anspruch 30 (= WO 2005/097872 A1) und Anspruch 31 (= EP 1 416 019 A1) näher definiert bzw. beschrieben.

Was die Menge an Dispergiermittel bzw. Netzmittel in der erfindungsgemä-βen Beschichtungszusammensetzung anbelangt, so kann die Beschichtungszusammensetzung das Dispergiermittel und/oder Netzmittel in Mengen im Bereich von 0,1 Gew.-% bis 50 Gew.-%, insbesondere 0,5 Gew.-% bis 40 Gew.-%, vorzugsweise 1 Gew.-% bis 30 Gew.-%, bevorzugt 2 Gew.-% bis 10 Gew.-%, bezogen auf die Zusammensetzung, enthalten.

Weiterhin kann die Beschichtungszusammensetzung nach der Erfindung mindestens eine Matrix- und/oder Gerüstsubstanz aufweisen. In diesem Zusammenhang kann die Matrix- und/oder Gerüstsubstanz ausgewählt sein aus der Gruppe von natürlichen, naturidentischen und künstlichen Polymeren, vorzugsweise wasserlöslichen und/oder in Wasser dispergierbaren Polymeren. Gleichermaßen kann die Matrix- bzw. Gerüstsubstanz ausgewählt sein aus der Gruppe von Methylcellulose, Carboxymethylcellullose, Hydroxypropylcellulose, Alginat, Gelatine, Casein, Polyurethanen, Polyacrylaten, Polyacrylamiden, Polyvinylalkoholen, Polyvinylacetaten, Polyvinylpyrrolidonen und Wachsen, insbesondere Bienenwachs, Carnaubawachs, Polyethylenwachs und Polypropylenwachs, sowie deren Kombinationen.

Die erfindungsgemäß eingesetzten Matrix- bzw. Gerüstsubstanzen dienen insbesondere zum Matrixaufbau und zur Inkorporation bzw. Einlagerung des leitfähigen Additivs und zudem gewissermaßen zum Masseaufbau der erfindungsgemäßen Beschichtungszusammensetzung.

Im Allgemeinen kann die Beschichtungszusammensetzung die Matrix- und/oder Gerüstsubstanz in Mengen im Bereich von 0,5 Gew.-% bis 70 Gew.-%, insbesondere 1 Gew.-% bis 60 Gew.-%, vorzugsweise 2 Gew.-% bis 50 Gew.-%, bevorzugt 5 Gew.-% bis 20 Gew.-%, bezogen auf die Zusammensetzung, enthalten.

Weiterhin kann die Beschichtungszusammensetzung nach der Erfindung mindestens ein Verdickungsmittel und/oder ein die Viskosität erhöhendes Mittel aufweisen. In diesem Zusammenhang kann das Verdickungsmittel bzw. das die Viskosität erhöhende Mittel ausgewählt sein aus der Gruppe von Pektinen, Alginaten, Tragacanth, Gummi arabicum, Guargummi, Carrageen, Carboxymethylcellulose, Carboxypropylcellulose, Polyacrylaten, Polysacchariden, Harnstoffderivaten und Tonen, insbesondere Bentonittonen, sowie deren Kombinationen.

In diesem Zusammenhang kann die Beschichtungszusammensetzung das Verdickungsmittel bzw. das die Viskosität erhöhende Mittel in Mengen im Bereich von 0,001 Gew.-% bis 25 Gew.-%, insbesondere 0,01 Gew.-% bis 10 Gew.-%, vorzugsweise 0,05 Gew.-% bis 5 Gew.-%, bevorzugt 0,1 Gew.-% bis 4 Gew.-%, besonders bevorzugt 0,5 Gew.-% bis 2 Gew.-%, bezogen auf die Zusammensetzung, enthalten.

Das Verdickungsmittel bzw. das die Viskosität erhöhende Mittel dient insbesondere der Einstellung der Viskosität insofern, als auf diese Weise eine optimale Herstellung bzw. Verarbeitung der Beschichtungszusammensetzung bzw. eine gleichmäßig Beschichtung des Saatguts mit der Beschichtungszusammensetzung erfolgen kann.

Weiterhin kann die Beschichtungszusammensetzung mindestens einen Entschäumer aufweisen. Diesbezüglich kann der Entschäumer ausgewählt sein aus der Gruppe von Polyethern, Polyacrylaten, Glycerin, Polyethylenglykol und Polysiloxanen sowie deren Kombinationen.

Die Beschichtungszusammensetzung kann den Entschäumer dabei in Mengen im Bereich von 0,001 Gew.-% bis 3 Gew.-%, insbesondere 0,01 Gew.-% bis 2 Gew.-%, vorzugsweise 0,1 Gew.-% bis 1 Gew.-%, bevorzugt 0,2 Gew.-% bis 1 Gew.-%, bezogen auf die Zusammensetzung, enthalten.

Weiterhin kann es erfindungsgemäß vorgesehen sein, dass die Beschichtungszusammensetzung mindestens ein Granulierhilfsmittel enthält. Diesbezüglich kann das Granulierhilfsmittel ein Wachs, insbesondere Bienenwachs, Carnaubawachs, Polyethylenwachs und/oder Polypropylenwachs, sein.

Darüber hinaus kann es im Rahmen der vorliegenden Erfindung vorgesehen sein, dass die Beschichtungszusammensetzung mindestens einen Pelletbildner bzw. eine massebildende Substanz enthält. In diesem Zusammenhang kann der Pelletbildner in nicht beschränkender Weise Torf, Ton und/oder Stärke sein.

Darüber hinaus kann die Beschichtungszusammensetzung mindestens ein weiteres Additiv und/oder mindestens einen weiteren Inhaltsstoff enthalten. In diesem Zusammenhang kann das weitere Additiv ausgewählt sein aus der Gruppe von Füllstoffen, insbesondere Carbonaten, vorzugsweise Calciumcarbonat; Granulatbildnern; Haftvermittlern; Rheologiestellmitteln; pH-Stellmitteln; Antiblock- und/oder Antihaftmitteln, insbesondere Wachsen; Weichmachern; UV-Adsorbern; Verlaufsmitteln; Farbstoffen und Farbpigmenten; und deren Kombinationen.

Zudem kann die Beschichtungszusammensetzung das weitere Additiv und/oder den weiteren Inhaltsstoff in Mengen im Bereich von 0,0001 Gew.-% bis 40 Gew.-%, insbesondere 0,001 Gew.-% bis 30 Gew.-%, vorzugsweise 0,01 Gew.-% bis 20 Gew.-%, bevorzugt 0,1 Gew.-% bis 15 Gew.-%, bezogen auf die Zusammensetzung, enthalten.

Gemäß einer erfindungsgemäß bevorzugten Ausführungsform kann die Beschichtungszusammensetzung zudem mindestens einen biologisch aktiven Wirk- und/oder Inhaltsstoff enthalten. Dabei kann der biologisch aktive Wirk- und/oder Inhaltsstoff ausgewählt sein aus der Gruppe von Bioziden, insbesondere Fungiziden, Herbiziden, Bakteriziden, Insektiziden, Mikrobiziden, Molluskiziden und Viruziden; Düngemitteln; Nährstoffen; Vitaminen; Keim- und/oder Wachstumsregulatoren, insbesondere Hormonen, vorzugsweise Phytohormonen; und deren Kombinationen.

In diesem Zusammenhang kann die Beschichtungszusammensetzung den biologisch aktiven Wirk- und/oder Inhaltsstoff in Mengen im Bereich von 0,0001 Gew.-% bis 20 Gew.-%, insbesondere 0,001 Gew.-% bis 15 Gew.-%, vorzugsweise 0,01 Gew.-% bis 10 Gew.-%, bevorzugt 0,1 Gew.-% bis 5 Gew.-%, bezogen auf die Zusammensetzung, enthalten.

Durch den gezielten Einsatz der in Rede stehenden Wirk- bzw. Inhaltsstoffe kann das Keimverhalten bzw. das Pflanzenwachstum weiterführend verbessert werden.

Erfindungsgemäß kann es zudem vorgesehen sein, dass auch die Beschichtungszusammensetzung als solche zumindest im Wesentlichen metallfrei, insbesondere metallfrei, vorzugsweise schwermetallfrei, oder zumindest metallarm, insbesondere schwermetallarm, ausgebildet ist. In diesem Zusammenhang kann die Beschichtungszusammensetzung allenfalls einen Metallgehalt, insbesondere einen Schwermetallgehalt, von höchstens 0,1 Gew.-%, insbesondere höchstens 0,01 Gew.-%, vorzugsweise höchstens 0,001 Gew.-%, bevorzugt höchstens 0,0001 Gew.-%, besonders bevorzugt höchstens 0,00001 Gew.-%, ganz besonders bevorzugt höchstens 0,000001 Gew.-%, bezogen auf die Zusammensetzung, aufweisen. Hierbei kann es sich beispielsweise um Katalysatorreste oder dergleichen handeln. Aufgrund der erfindungsgemäß bevorzugten Ausführungsform, wonach die erfindungsgemäße Beschichtungszusammensetzung metall- bzw. schwermetallfrei oder zumindest metall- bzw. schwermetallarm ausgebildet ist, weist die Beschichtungszusammensetzung nach der Erfindung als solche eine hohe Umweltverträglichkeit bzw. Lebensmittelkompatibilität auf.

In diesem Zusammenhang kann es erfindungsgemäß gleichermaßen vorgesehen sein, dass die Beschichtungszusammensetzung zumindest im Wesentlichen frei von metallhaltigen Pigmenten bzw. metallartigen Farbstoffen ist.

Was die Beschichtungszusammensetzung nach der Erfindung als solche weiterhin anbelangt, so kann diese insbesondere unter Verarbeitungs- und/oder Anwendungsbedingungen, insbesondere unter Atmosphärendruck (101,325 kPa) und in einem Temperaturbereich von 10 bis 100 °C, vorzugsweise 15 bis 70 °C, eine fließfähige und/oder flüssige Konsistenz aufweisen. Hierdurch ist erfindungsgemäß eine optimale Verarbeitung bzw. Auftragung mit anschließender Trocknung bzw. Aushärtung der Beschichtungszusammensetzung auf das zu behandelnde Saatgut möglich. Wie zuvor angeführt, kann die Viskosität bzw. Rheologie eingestellt bzw. maßgeschneidert werden, was zu einer weiteren Verbesserung der Verarbeitung bzw. Anwendung der erfindungsgemäßen Beschichtungszusammensetzung führt.

In diesem Zusammenhang ist es erfindungsgemäß bevorzugt, wenn die Beschichtungszusammensetzung, insbesondere unter Verarbeitungs- und/oder Anwendungsbedingungen, insbesondere unter Atmosphärendruck (101,325 kPa) und in einem Temperaturbereich von 10 bis 100 °C, vorzugsweise 15 bis 70 °C, eine dynamische Viskosität im Bereich von 10 bis 50.000 mPa·s, insbesondere 25 bis 30.000 mPa·s, vorzugsweise 50 bis 25.000 mPa·s, bevorzugt 75 bis 20.000 mPa·s, aufweist.

Die Viskosität der erfindungsgemäßen Beschichtungszusammensetzung kann insbesondere auf Basis der DIN 53019 bestimmt werden.

Was die Beschichtungszusammensetzung im getrockneten oder ausgehärteten Zustand anbelangt, so kann diese eine Gesamtrestfeuchte im Bereich von 0,001 bis 5 Gew.-%, insbesondere 0,01 bis 3 Gew.-%, vorzugsweise 0,1 bis 2 Gew.-%, bevorzugt 0,2 bis 1 Gew.-%, bezogen auf die Beschichtungszusammensetzung, aufweisen.

Demnach sollte die Beschichtungszusammensetzung nach der Erfindung im getrockneten bzw. ausgehärteten Zustand eine Gesamtrestfeuchte von höchstens 5 Gew.-%, insbesondere höchstens 3 Gew.-%, vorzugsweise höchstens 2 Gew.-%, bevorzugt höchstens 1 Gew.-%, bezogen auf die Beschichtungszusammensetzung, aufweisen.

Wie zuvor angeführt, zeichnet sich die erfindungsgemäße Beschichtungszusammensetzung aufgrund der zweckgerichteten Verwendung eines elektrisch leitfähigen Additivs dadurch aus, dass diese als solche elektrisch leitfähig ist bzw. antistatische Eigenschaften bzw. elektrodissipative Eigenschaften aufweist.

In diesem Zusammenhang ist es erfindungsgemäß bevorzugt, wenn die Beschichtungszusammensetzung nach der Erfindung im getrockneten und/oder ausgehärteten Zustand einen spezifischen Oberflächenwiderstand σₛ von höchstens 10¹² Ω/sq, insbesondere höchstens 10¹¹ Ω/sq, vorzugsweise höchstens 10¹⁰ Ω/sq, bevorzugt höchstens 10⁹ Ω/sq, besonders bevorzugt höchstens 10⁸ Ω/sq, aufweist.

Der spezifische Oberflächenwiderstand σₛ stellt dabei gewissermaßen ein Maß für die Eigenschaft der Beschichtungszusammensetzung dar, einem elektrischen Oberflächenstrom zu widerstehen, der an der Oberfläche der Beschichtungszusammensetzung entlangfließt. In diesem Zusammenhang stellt der spezifische Oberflächenwiderstand σₛ eine Kenngröße im Hinblick auf die elektrostatischen Eigenschaften des zugrundeliegenden Materials dar.

Gemäß der zugrundeliegenden DIN EN ISO 61340-5-1 kann eine Einteilung der elektrischen Eigenschaften der erfindungsgemäßen Beschichtungszusammensetzung im getrockneten bzw. ausgehärteten Zustand dahingehend erfolgen, dass diese statisch ableitend, statisch leitfähig bzw. leitfähig oder leitend ausgebildet ist. Als statisch ableitende Zusammensetzung gilt diesbezüglich eine solche Zusammensetzung, welche einen spezifischen Oberflächenwiderstand σ_{S} im Bereich von 10⁹ Ω/sq bis 10¹² Ω/sq aufweist. Entsprechend gilt eine Zusammensetzung als statisch leitfähig, sofern diese einen spezifischen Oberflächenwiderstand σₛ, im Bereich von 10⁶ Ω/sq bis 10⁹ Ω/sq aufweist, während eine Zusammensetzung als leitfähig bezeichnet wird, wenn diese einen spezifischen Oberflächenwiderstand σₛ im Bereich von 10² Ω/sq bis 10⁵Ω/sq aufweist. Eine Zusammensetzung mit einem weiterführend verringerten spezifischen Oberflächenwiderstand σₛ wird dementsprechend als leitende Zusammensetzung bezeichnet.

Die Bestimmung des spezifischen Oberflächenwiderstands σₛ kann im Rahmen der vorliegenden Erfindung unter Zugrundelegung der diesbezüglich einschlägigen DIN EN 61340-2-3:2000 erfolgen.

Was die elektrischen Eigenschaften der erfindungsgemäßen Beschichtungszusammensetzung weiterhin anbelangt, so kann die Beschichtungszusammensetzung im getrockneten und/oder ausgehärteten Zustand einen spezifischen Widerstand ρₛ und/oder eine Resistivität von höchstens 10¹⁰ Ω·m, insbesondere höchstens 10⁵ Ω·m, vorzugsweise höchstens 10³ Ω·m, aufweisen.

In diesem Zusammenhang sollte die erfindungsgemäße Zusammensetzung somit im getrockneten und/oder ausgehärteten Zustand einen spezifischen Widerstand ρₛ und/oder eine Resistivität im Bereich von 10⁻⁷ Ω·m bis 10¹⁰ Ω·m, insbesondere im Bereich von 10⁻⁶ Ω·m bis 10⁵ Ω·m, vorzugsweise im Bereich von 10⁻⁵ Ω·m bis 10³ Ω·m, aufweisen.

Die Bestimmung des spezifischen Widerstands σₛ kann gleichermaßen auf Basis der zuvor angeführten DIN EN 61340-2-3: (2000-12) erfolgen.

Aufgrund der definierten elektrischen Eigenschaften der erfindungsgemäßen Beschichtungszusammensetzung resultieren insgesamt hervorragende antistatische Eigenschaften des mit der Beschichtungszusammensetzung ausgerüsteten Saatguts.

Ein weiterer Gegenstand der vorliegenden Erfindung - gemäß einem **zweiten** Aspekt der vorliegenden Erfindung - ist zudem die Verwendung mindestens eines zumindest im Wesentlichen metallfreien, vorzugsweise metallfreien, elektrisch leitfähigen Additivs, insbesondere eines elektrisch leitfähigen Kohlenstoffallotrops bzw. eines elektrisch leitfähigen Polymers, vorzugsweise wie zuvor definiert, zur Herstellung einer antistatischen und/oder elektrisch leitfähigen und/oder elektrodissipativen Saatgut-Beschichtungszusammensetzung und/oder Saatgut-Beschichtung.

Zudem ist ein weiterer Gegenstand der vorliegenden Erfindung - gemäß einem **dritten** Aspekt der vorliegenden Erfindung - die erfindungsgemäße Verwendung mindestens eines zumindest im Wesentlichen metallfreien, vorzugsweise metallfreien, elektrisch leitfähigen Additivs, insbesondere eines elektrisch leitfähigen Kohlenstoffallotrops und/oder eines elektrisch leitfähigen Polymers, vorzugsweise wie zuvor definiert, zur antistatischen und/oder elektrisch leitfähigen und/oder elektrodissipativen Ausrüstung von Saatgut und/oder zur antistatischen und/oder elektrisch leitfähigen und/oder elektrodissipativen Ausrüstung einer Saatgut-Beschichtung.

Wiederum weiterer Gegenstand der vorliegenden Erfindung - gemäß einem **vierten** Aspekt der vorliegenden Erfindung - ist die Verwendung einer Beschichtungszusammensetzung zur antistatischen und/oder elektrisch leitfähigen und/oder elektrodissipativen Ausrüstung von Saatgut, wobei die Beschichtungszusammensetzung mindestens ein zumindest im Wesentlichen metallfreies, vorzugsweise metallfreies, elektrisch leitfähiges Additiv, insbesondere ein elektrisch leitfähiges Kohlenstoffallotrop und/oder ein elektrisch leitfähiges Polymer, vorzugsweise wie zuvor definiert, aufweist.

Insbesondere ist ein weiterer Gegenstand der vorliegenden Erfindung - gemäß einem **fünften** Aspekt der vorliegenden Erfindung - das erfindungsgemäße Verfahren zur Herstellung einer antistatischen bzw. elektrisch leitfähigen bzw. elektrodissipativen Saatgut-Beschichtungszusammensetzung, insbesondere zur Ausrüstung von Saatgut, wobei mindestens ein zumindest im Wesentlichen metallfreies, vorzugsweise metallfreies, elektrisch leitfähiges Additiv, insbesondere ein elektrisch leitfähiges Kohlenstoffallotrop und/oder ein elektrisch leitfähiges Polymer, vorzugsweise wie zuvor definiert, in einer kontinuierlichen Phase und/oder einem Trägermedium, insbesondere Dispersionsmittel und/oder Solubilisierungsmittel, vorzugsweise in Gegenwart mindestens eines Dispergiermittels und/oder Netzmittels, unter Einbringung eines für die Dispergierung ausreichenden Energieeintrags dispergiert wird.

Der erfindungsgemäßen Beschichtungszusammensetzung zugrundeliegende Dispersionen, welche das erfindungsgemäß verwendete leitfähige Additiv, insbesondere in Form von Kohlenstoffnanoröhren (CNTs), enthalten und welche im Rahmen der vorliegenden Erfindung eingesetzt werden können, sind beispielsweise nach dem in der DE 10 2006 055 106 A1, der WO 2008/058589 A2, der US 2010/0059720 A1 und der CA 2,668,489 A1 beschriebenen Verfahren erhältlich, deren jeweiliger Offenbarungsgehalt durch Bezugnahme vollumfänglich eingeschlossen ist. Die vorgenannten Dokumente betreffen ein Verfahren zum Dispergieren von Kohlenstoffnanoröhren (CNTs) in einer kontinuierlichen Phase, insbesondere in mindestens einem Dispersionsmittel, wobei die Kohlenstoffnanoröhren (CNTs), insbesondere ohne vorangehende Vorbehandlung, in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrages dispergiert werden. Die während des Dispergiervorgangs eingetragene Energiemenge, berechnet als eingetragene Energie pro Menge an zu dispergierenden Kohlenstoffnanoröhren (CNTs), kann dabei insbesondere 15.000 bis 100.000 kJ/kg betragen; als Dispergiermittel können insbesondere polymere Dispergiermittel, vorzugsweise auf Basis funktionalisierter Polymere, insbesondere mit zahlenmittleren Molekularmassen von mindestens 500 g/mol, eingesetzt werden. Mit diesem Dispergierverfahren können stabile Dispersionen von Kohlenstoffnanoröhren (CNTs) erhalten werden. Den in Rede stehenden Dispersionen können zudem die zuvor angeführten weiteren Inhalts- bzw. Wirkstoffe zugesetzt sein.

In diesem Zusammenhang ist ein weiterer Gegenstand der vorliegenden Erfindung - gemäß einem **sechsten** Aspekt der vorliegenden Erfindung - auch die Saatgut-Beschichtungszusammensetzung als solche, insbesondere zur antistatischen bzw. elektrisch leitfähigen bzw. elektrodissipativen Ausrüstung von Saatgut, welche nach dem zuvor beschriebenen Verfahren gemäß dem fünften Aspekt der vorliegenden Erfindung erhältlich ist.

Wie oben bereits ausgeführt, zeichnet sich die erfindungsgemäße Beschichtungszusammensetzung durch hervorragende Eigenschaften hinsichtlich der Ableitung von elektrischen Ladungen aus, so dass insgesamt ausgezeichnete antistatische Eigenschaften vorliegen. Zudem kann die erfindungsgemäße Beschichtungszusammensetzung im Hinblick auf die jeweiligen Anwendungsanforderungen modifiziert bzw. maßgeschneidert werden, insbesondere auch durch die Zugabe weiterer Inhaltsstoffe. Weiterhin lässt sich die erfindungsgemäße Beschichtungszusammensetzung in hervorragender Weise verarbeiten, insbesondere was den Auftrag bzw. die Beschichtung von Saatgut anbelangt. Zudem zeichnet sich die erfindungsgemäße Zusammensetzung durch eine hohe Lagerungsstabilität aus.

Zudem ist ein weiterer Gegenstand der vorliegenden Erfindung - gemäß einem **siebten** Aspekt der vorliegenden Erfindung - das Verfahren zur Herstellung eines mit einer Beschichtung ausgerüsteten Saatguts, vorzugsweise eines Saatguts in Form von Saatkörnern oder dergleichen, mit antistatischen und/oder elektrisch leitfähigen und/oder elektrodissipativen Eigenschaften. In diesem Zusammenhang wird das Saatgut mit der erfindungsgemäßen Saatgut-Beschichtungszusammensetzung, wie zuvor definiert, ausgerüstet bzw. beschichtet.

In diesem Zusammenhang kann die Beschichtung beispielsweise durch Inkontaktbringen, insbesondere Auftragen bzw. Aufsprühen, der Saatgut-Beschichtungszusammensetzung, insbesondere im flüssigen bzw. fließfähigen und/oder im nicht getrockneten bzw. nicht gehärteten Zustand, auf das Saatgut erfolgen. Diesbezüglich kann sich ein Trocknen bzw. Aushärten der Saatgut-Beschichtungszusammensetzung anschließen.

Die diesbezüglich einsetzbaren Beschichtungsverfahren sind dem Fachmann wohlbekannt. Beispielsweise können insbesondere ausgehend von wässrigen Dispersionen auf Basis der erfindungsgemäßen Beschichtungszusammensetzung Verfahren auf Basis von Trommelbeschichtung, insbesondere unter Verwendung eines Mischers, Aufsprühverfahren, Tauchverfahren oder dergleichen eingesetzt werden. Die Trocknung bzw. Aushärtung der erfindungsgemäßen Zusammensetzung kann beispielsweise auf Basis einer Lufttrocknung, gegebenenfalls unter leichter bis mäßiger Erwärmung, erfolgen. Die Trocknung bzw. Aushärtung kann auch eine Vernetzung bzw. Polymerisierung von eingesetzten polymerisierbaren Komponenten umfassen.

Auf Basis des erfindungsgemäßen Verfahrens können in effizienter Weise elektrisch leitende bzw. antistatische sowie elektrodissipative Schichten auf einem Saatgut hergestellt werden. Das erfindungsgemäße Verfahren ist dabei kostengünstig sowie großtechnisch umsetzbar. Auf Basis des erfindungsgemäßen Verfahrens werden zudem dauerhafte und beständige Beschichtungen von Saatgut ermöglicht, welche einen permanenten antistatischen bzw. elektrisch leitenden Effekt aufweisen.

Schließlich betrifft die vorliegenden Erfindung - gemäß einem **achten** Aspekt der vorliegenden Erfindung - das erfindungsgemäße Saatgut, insbesondere Saatgut in Form von Saatkörnern oder dergleichen, wobei das Saatgut mit mindestens einer antistatischen und/oder elektrisch leitfähigen und/oder elektrodissipativen Beschichtung bzw. Schicht ausgerüstet ist, wobei die Beschichtung eine Saatgut-Beschichtungszusammensetzung, insbesondere wie zuvor definiert, aufweist oder hieraus besteht.

Im Rahmen der vorliegenden Erfindung ist es insbesondere vorgesehen, dass die Beschichtung des erfindungsgemäßen Saatguts die Beschichtungszusammensetzung nach der Erfindung in getrockneter bzw. in ausgehärteter Form, wie zuvor definiert, aufweist.

Gemäß einer weiteren erfindungsgemäß bevorzugten Ausführungsform ist die Beschichtung als äußerste Schicht auf dem Saatgut angeordnet. Gleicherma-βen ist es erfindungsgemäß bevorzugt, wenn die Beschichtung das Saatgut zumindest im Wesentlichen vollständig umgibt bzw. umhüllt. Mit anderen Worten ist es erfindungsgemäß von Vorteil, wenn die Beschichtung zumindest im Wesentlichen kontinuierlich ausgebildet ist. Hierdurch werden die antistatischen Eigenschaften der Beschichtung weiterführend verbessert. Zudem wird durch die vorgenannten Maßnahmen ein optimaler Abtransport elektrischer Ladungen zur Vermeidung einer elektrostatischen Aufladung gewährleistet.

Die vorliegende Erfindung ist im Allgemeinen nicht auf die Ausbildung einer einzelnen Beschichtung bzw. Schicht auf Basis der erfindungsgemäßen Beschichtungszusammensetzung beschränkt. Vielmehr kann das erfindungsgemäße Saatgut eine Vielzahl von Beschichtungen auf Basis der erfindungsgemäßen Beschichtungszusammensetzung aufweisen. Zudem kann das erfindungsgemäße Saatgut auch weitere Beschichtungen bzw. Schichten, welche als solche keine elektrostatischen bzw. elektrisch leitende Eigenschaften besitzen, aufweisen, wobei diese vorzugsweise zwischen der Beschichtung auf Basis der erfindungsgemäßen Beschichtungszusammensetzung und dem Saatkorn angeordnet sind. Die Realisierung von mehreren Schichten ist mit dem Vorteil verbunden, dass jeweils voneinander unterschiedliche Schichten aufgetragen werden können, welche jeweils spezifische Eigenschaften aufweisen, so dass diesbezüglich eine weitere Maßschneiderung bzw. Anpassung an das jeweilige Anforderungsprofil erfolgen kann.

Was die Beschichtung als solche weiterhin anbelangt, so sollte diese eine Schichtdicke im Bereich von 1 nm bis 5 mm, insbesondere im Bereich von 2 nm bis 4 mm, vorzugsweise im Bereich von 5 nm bis 3 mm, bevorzugt im Bereich von 10 nm bis 2 mm, besonders bevorzugt im Bereich von 100 nm bis 1 mm, ganz besonders bevorzugt im Bereich von 1.000 nm bis 0,5 mm, aufweisen.

Was die elektrischen Eigenschaften der Beschichtung bzw. der aufgetragenen Schicht als solche anbelangt, so sollte die Beschichtung einen spezifischen Oberflächenwiderstand σₛ, von höchstens 10¹² Ω/sq, insbesondere höchstens 10" Ω/sq, vorzugsweise höchstens 10¹⁰Ω/sq, bevorzugt höchstens 10⁹ Ω/sq, besonders bevorzugt höchstens 10⁸ Ω/sq, aufweisen. In diesem Zusammenhang sollte die Beschichtung zudem einen spezifischen Oberflächenwiderstand σₛ im Bereich von 10⁻³ Ω/sq bis 10¹² Ω/sq, insbesondere im Bereich von 10⁻¹ Ω/sq bis 10" Ω/sq, vorzugsweise im Bereich von 10⁰ Ω/sq bis 10¹⁰ Ω/sq, bevorzugt im Bereich von 10¹ Ω/sq bis 10⁹ Ω/sq, besonders bevorzugt im Bereich von 10² Ω/sq bis 10⁸ Ω/sq, aufweisen. Diesbezüglich kann gleicherma-βen auf die DIN EN 61340-2-3:(2000-12) verwiesen werden, wie zuvor angeführt.

Zudem sollte die Beschichtung einen spezifischen Widerstand ρₛ und/oder eine Resistivität von höchstens 10¹⁰ Ω·m, insbesondere höchstens 10⁵ Ω·m, vorzugsweise höchstens 10³ Ω·m, aufweisen.

In diesem Zusammenhang kann es erfindungsgemäß vorgesehen sein, dass die Beschichtung im getrockneten und/oder ausgehärteten Zustand einen spezifischen Widerstand ρₛ und/oder eine Resistivität im Bereich von 10⁻⁷ Ω·m bis 10¹⁰ Ω·m, insbesondere im Bereich von 10⁻⁶ Ω·m bis 10⁵ Ω·m, vorzugsweise im Bereich von 10⁻⁵ Ω·m bis 10³ Ω·m, aufweist.

Was das erfindungsgemäße Saatgut weiterhin anbelangt, so sollte das Saatgut, d. h. die das Saatgut ausbildenden Saatkörner (d. h. die unbeschichteten separaten Saatkörner als solche), eine Teilchen- bzw. Korngröße, insbesondere eine mittlere Teilchen- bzw. Korngröße D50, im Bereich von 0,01 mm bis 5 cm, insbesondere im Bereich von 0,05 mm bis 2 cm, vorzugsweise im Bereich von 0,1 mm bis 1 cm, bevorzugt im Bereich von 0,2 mm bis 5 mm, besonders bevorzugt im Bereich von 0,3 mm bis 3 mm, ganz besonders bevorzugt 0,5 mm bis 2 mm, aufweisen. Die diesbezügliche Bestimmung kann beispielsweise lichtmikroskopisch oder dergleichen erfolgen.

Weiterhin sollte das Saatgut, d. h. die das Saatgut ausbildenden Saatkörner (d. h. die unbeschichteten separaten Saatkörner als solche), eine Tausendkornmasse (TKM) im Bereich von 0,01 g bis 1.000 g, insbesondere 0,05 g bis 800 g, vorzugsweise 0,1 g bis 500 g, bevorzugt 0,3 g bis 300 g, besonders bevorzugt 0,5 g bis 100 g, ganz besonders bevorzugt 0,5 g bis 50 g, aufweisen.

Gemäß einer erfindungsgemäß bevorzugten Ausführungsform ist das beschichtete Saatgut derart ausgestaltet, dass jeweils ein Saatkorn bzw. ein einzelner Samen, vorzugsweise vollständig mit der erfindungsgemäßen Beschichtung ausgerüstet ist, so dass gemäß dieser erfindungsgemäßen Aus-Whrungsform gewissermaßen Einkornsysteme vorliegen. Gleichermaßen ist es im Rahmen der vorliegenden Erfindung jedoch auch möglich, dass mehrere, insbesondere zwei, drei oder vier oder mehr Samenkörner bzw. Samen, nach Art eines Agglomerats gemeinsam mit einer Beschichtung auf Basis der erfindungsgemäßen Beschichtungszusammensetzung umhüllt sind, so dass diesbezüglich sozusagen Mehrkornsysteme vorliegen können.

Grundsätzlich ist in diesem Zusammenhang der Begriff "Saatgut", wie er erfindungsgemäß verwendet wird, breit zu verstehen und umfasst in seiner allgemeinen Form Saatgut sämtlicher Art, wie zum Beispiel Saatkörner, Samen, Früchte, Knollen, Stecklinge und dergleichen. Erfindungsgemäß bevorzugt bezieht sich der Begriff "Saatgut" jedoch auf Samenkörner bzw. Samen als solche.

Das Saatgut kann dabei ausgewählt sein aus der Gruppe von Gemüsesaatgut, Getreidesaatgut und Zierpflanzensaatgut, insbesondere Blumensaatgut.

Erfindungsgemäß geeignetes Saatgut kann beispielsweise und in nicht beschränkender Weise Saatgut von Blattfrucht- oder Halmfruchtpflanzen, beispielsweise Hackfrucht- oder Getreidepflanzen, sein. Insbesondere kann das Saatgut ein Saatgut von Ölpflanzen, Gewürzpflanzen, Hartweizen, Weizen, Gerste, Hafer, Roggen, Mais, Soja, Kreuzblütlerpflanzen, Baumwolle, Sonnenblumen, Bananen, Reis, Raps, Rüben, Zuckerrüben, Futterrüben, Kartoffelpflanzen, Gras, Futtergras, Tomaten, Lauch, Kürbis, Kohl, Eisbergsalat, Pfeffer, Gurken, Melonen, Bohnen, Erbsen, Knoblauchsamen, Karotten, Zuckerrohr, Tabak, Weintrauben, Petunien und Geranien, Stiefmütterchen oder dergleichen sein.

Weitere Vorteile, Eigenschaften und Merkmale der vorliegen Erfindung ergeben sich aus der folgenden Beschreibung von auf Basis der Figurendarstellungen dargestellten erfindungsgemäßen Ausführungsbeispielen. Es zeigt:
- Fig. 1: einen schematischen Querschnitt eines erfindungsgemäßen Saatguts entsprechend einer ersten Ausführungsform;
- Fig. 2: einen schematischen Querschnitt eines erfindungsgemäßen Saatguts gemäß einer weiteren erfindungsgemäßen Ausführungsform;
- Fig. 3: eine fotografische Abbildung zur Dokumentation des antistatischen Verhaltens eines erfindungsgemäßen Saatguts (Fig. 3A) im Vergleich zu dem elektrostatischen Verhalten eines nicht erfindungsgemäßen Saatguts (Fig. 3B).

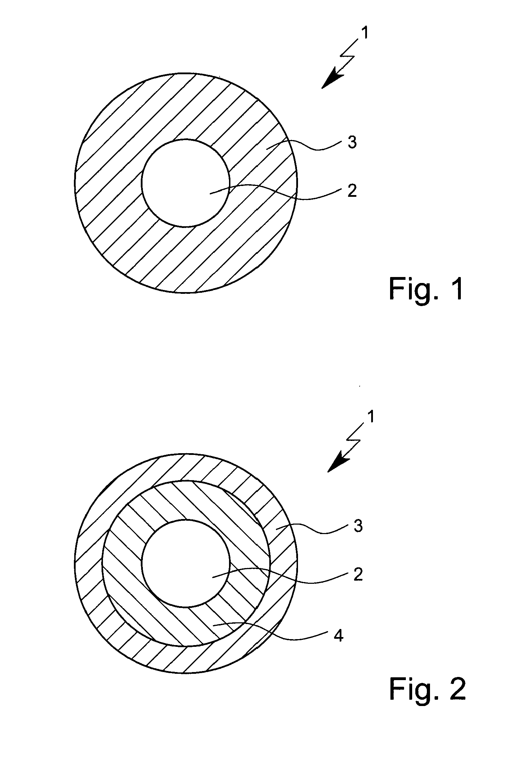

Fig. 1 zeigt einen schematischen Querschnitt durch den Schichtaufbau eines erfindungsgemäßen Saatguts 1. Der Kern des erfindungsgemäßen Saatguts wird durch ein entsprechendes Saatkorn 2 (synonym als Samenkorn bzw. (Pflanzen-)Samen bezeichnet) gebildet, auf welchem vollumfänglich eine Beschichtung bzw. Schicht 3 auf Basis der erfindungsgemäßen Saatgut-Beschichtungszusammensetzung aufgebracht ist, wobei die erfindungsgemäße Beschichtungszusammensetzung mindestens ein zumindest im Wesentlichen metallfreies, vorzugsweise metallfreies, sowie elektrisch leitfähiges Additiv aufweist.

Fig. 2 zeigt eine weitere erfindungsgemäße Ausführungsform auf Basis eines erfindungsgemäßen Saatguts 1, bei welchem der Kern gleichermaßen durch ein einzelnes Saatkorn 2 gebildet ist. Das erfindungsgemäße Saatgut gemäß dieser Ausführungsform weist eine innere Beschichtung bzw. Schicht 4 sowie eine darauf aufgebrachte äußere Beschichtung bzw. Schicht 3 auf Basis der erfindungsgemäßen Beschichtungszusammensetzung auf.

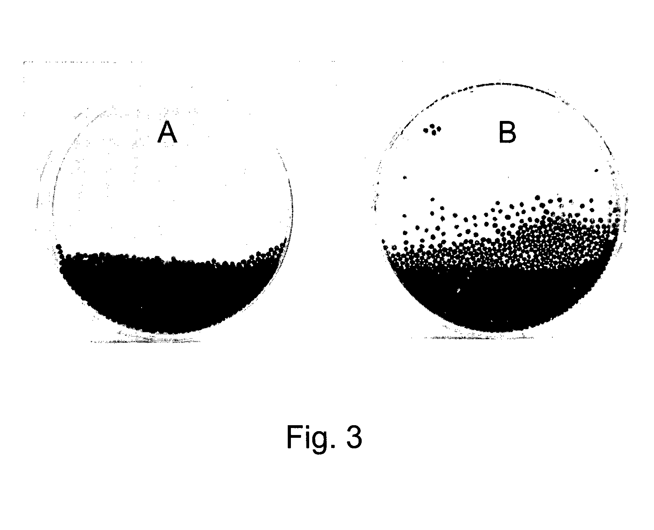

In diesem Zusammenhang zeigt Fig. 3A ein erfindungsgemäßes Saatgut auf Basis von Rapskörnern, welche vollumfänglich mit einer Beschichtung auf Basis der erfindungsgemäßen Beschichtungszusammensetzung ausgerüstet sind, wobei das erfindungsgemäße Saatgut in eine geschlossene Petrischale aus Polystyrol eingebracht ist. Die Figur zeigt das antistatische Verhalten nach mehrmaligem Schütteln der Petrischale. Aufgrund der hervorragenden antistatischen Eigenschaften haftet das erfindungsgemäße Saatgut nicht an der Wandung der Petrischale.

Fig. 3B bezieht sich auf ein Saatgut, bei welchem es sich gleichermaßen um Rapssamen handelt, welche jedoch mit einer Beschichtung ohne elektrisch leitfähiges Additiv ausgerüstet sind. Nach mehrmaligem Schütteln der geschlossenen Petrischale ist eine deutliche Verteilung bzw. ein Anhaften bzw. "Kleben" der jeweiligen Saatkörner an der Wandung der Petrischale zu beobachten, was durch den elektrostatischen Effekt bedingt ist.

Weitere Ausgestaltungen, Abwandlungen und Variationen sowie Vorteile der vorliegenden Erfindung sind für den Fachmann beim Lesen der Beschreibung ohne weiteres erkennbar und realisierbar ohne dass er dabei den Rahmen der vorliegenden Erfindung verlässt.

Die vorliegende Erfindung wird anhand der nachfolgenden Ausführungsbeispiele weiter veranschaulicht, welche die vorliegende der Erfindung jedoch keinesfalls beschränken.

### AUSFÜHRUNGSBEISPIELE:

### Beispiel 1: Verwendung einer Beschichtungszusammensetzung auf Basis einer wässrigen CNT-Dispersion (erfindungsgemäß)

100 g Rapskörner werden mit 1 g einer wässrigen CNT-Dispersion, enthaltend 5 Gew.-% mehrwandige Kohlenstoffnanoröhrchen (Produktname der Dispersion "LP-X 21829", BYK Chemie GmbH), in Kontakt gebracht. Die Beschichtung der Körner erfolgt in einem SpeedMixer Typ DAC 400.1-1100.1 (Modell DAC 400.1 FVZ) der Firma Hausschild für 30 Sekunden bei 1.000 Umdrehungen pro Minute. Dabei wird die Oberfläche der Körner möglichst vollständig benetzt. Anschließend wird die Beschichtung kurz bei Raumtemperatur getrocknet.

Die so beschichteten Rapskörner werden anschließend in einer Petrischale aus Polystyrol (z.B. Artikelnummer 391-0878 von VWR International) im Hinblick auf ihr antistatisches Verhalten überprüft. Nach mehrmaligem Schütteln der verschlossenen Petrischale bleiben keine beschichteten Körner an den Kunststoffwandungen aufgrund statischer Aufladung haften. Die beschichteten Rapskörner weisen somit ein hervorragendes antistatisches Verhalten auf.

Zur Ermittlung des spezifischen Oberflächenwiderstandes σₛ der hergestellten Beschichtung im getrockneten Zustand wird die zugrundeliegende Dispersion auf Melinex^{®}-Folien (Material: PET) appliziert und getrocknet. Eine Messung gemäß DIN EN 61340-2-3 (2000-12) ergibt einen spezifischen Oberflächenwiderstand σₛ von 1,12·10² Ω/sq.

### Beispiel 2: Verwendung einer Beschichtungszusammensetzung auf Basis einer wässrigen Leitruß-Dispersion (erfindungsgemäß)

100 g Rapskörner werden mit 1 g einer wässrigen Leitruß-Dispersion, enthaltend 10 Gew.-% Leitruß (Produktname der Dispersion "LP-X 21564", BYK Chemie GmbH), in Kontakt gebracht. Die Beschichtung der Körner erfolgt in einem SpeedMixer Typ DAC 400.1-1100.1 (Modell DAC 400.1 FVZ) der Firma Hausschild für 30 Sekunden bei 1.000 Umdrehungen pro Minute. Dabei wird die Oberfläche der Körner möglichst vollständig benetzt. Anschließend wird die Beschichtung kurz bei Raumtemperatur getrocknet.

Die so beschichteten Rapskörner werden anschließend in einer Petrischale aus Polystyrol (z. B. Artikelnummer 391-0878 von VWR International) im Hinblick auf ihr antistatisches Verhalten überprüft. Nach mehrmaligem Schütteln der verschlossenen Petrischale bleiben keine beschichteten Körner an den Kunststoffwänden aufgrund statischer Aufladung haften. Demnach weisen die beschichteten Rapskörner hervorragende antistatische Eigenschaften auf.

Zur Ermittlung des spezifischen Oberflächenwiderstandes σₛ der erzeugten Beschichtung im getrockneten Zustand wird die verwendete Dispersion auf Melinex^{®}-Folien (Material: PET) appliziert und getrocknet. Eine Messung gemäß DIN EN 61340-2-3 (2000-12) ergibt einen spezifischen Oberflächenwiderstand σₛ von 2,09·10³ Ω /sq.

### Beispiel 3: Verwendung einer Beschichtungszusammensetzung auf Basis eines elektrisch leitfähigen organischen Polymers (erfindungsgemäß)

100 g Rapskörner werden mit 1 g einer Beschichtungszusammensetzung, enthaltend 0,8 Gew.-% PEDOT: PSS, Poly(2,3-dihydrothieno-1,4-dioxin)-poly(styrolsulfonat) (Produktname "ORGACON IJ-1005", Sigma-Aldrich), in Kontakt gebracht. Die Beschichtung der Körner erfolgt in einem SpeedMixer Typ DAC 400.1-1100.1 (Modell DAC 400.1 FVZ) der Firma Hausschild für 30 Sekunden bei 1.000 Umdrehungen pro Minute. Dabei wird die Oberfläche der Körner möglichst vollständig benetzt. Anschließend wird die Beschichtung kurz bei Raumtemperatur getrocknet.

Die so beschichteten Rapskörner werden anschließend in einer Petrischale aus Polystyrol (z.B. Artikelnummer 391-0878 von VWR International) im Hinblick auf ihr antistatisches Verhalten überprüft. Nach mehrmaligem Schütteln der verschlossenen Petrischale bleiben keine beschichteten Körner an den Kunststoffwänden aufgrund statischer Aufladung haften. Somit weisen auch die gemäß diesem Beispiel beschichteten Saatkörner hervorragende antistatische Eigenschaften auf.

Zur Ermittlung des spezifischen Oberflächenwiderstandes σₛ der Beschichtung im getrockneten Zustand wird die verwendete Dispersion auf Melinex^{®}-Folien (Material: PET) appliziert und getrocknet. Eine Messung gemäß DIN EN 61340-2-3 (2000-12) ergibt einen spezifischen Oberflächenwiderstand σₛ von 8,01·10² Ω /sq.

### Beispiel 4: Verwendung einer Beschichtungszusammensetzung auf Basis einer wässrigen Flammruß-Dispersion (nicht erfindungsgemäß)

100 g Rapskörner werden mit 1 g einer wässrigen Flammruß-Dispersion, enthaltend 10 Gew.-% nichtleitenden Flammruß (Produktname "COLOUR BLACK FW 1 ", Orion Engineerd Carbons), in Kontakt gebracht. Die Beschichtung der Körner erfolgt in einem SpeedMixer Typ DAC 400.1-1100.1 (Modell DAC 400.1 FVZ) der Firma Hausschild für 30 Sekunden bei 1.000 Umdrehungen pro Minute. Dabei wird die Oberfläche der Körner möglichst vollständig benetzt. Anschließend wird die Beschichtung kurz bei Raumtemperatur getrocknet.

Die so beschichteten Rapskörner werden anschließend in einer Petrischale aus Polystyrol (z. B. Artikelnummer 391-0878 von VWR International) im Hinblick auf ihr antistatisches Verhalten überprüft. Nach mehrmaligem Schütteln der verschlossenen Petrischale ist eine elektrostatische Aufladung der Körner und Kunststoffwände zu beobachten, so dass sehr viele Körner an den Kunststoffwänden der Petrischale anhaften. Eine Vereinzelung der Körner oder ein zuverlässiges Dosieren der Körner ist daher nicht möglich. Die beschichteten Saatkörner weisen insgesamt schlechte antistatische Eigenschaften auf.

Zur Ermittlung des spezifischen Oberflächenwiderstandes σₛ der hergestellten Beschichtung im getrockneten Zustand wird die verwendete Dispersion auf Melinex^{®}-Folien (Material: PET) appliziert und getrocknet. Eine Messung gemäß DIN EN 61340-2-3 (2000-12) ergibt einen spezifischen Oberflächenwiderstand σₛ von 8,01·10¹² Ω /sq.

### Weiterführende Untersuchungen und Anwendungsstudien:

Um das elektrostatische Verhalten der untersuchten Saatgute weiterführend beurteilen zu können, werden die in den zuvor angeführten Beispielen 1 bis 4 beschriebenen beschichteten Saatkörner in jeweils definierten Mengen in einen verschließbaren Kunststoffkubus aus Polystyrol mit einer jeweiligen Kantenlänge von 10 cm gegeben. Als weiteres Vergleichsbeispiel dient ein unbehandeltes bzw. unbeschichtetes Saatgut in Form von Rapskörnern (Beispiel 5). Die mit dem jeweiligen Saatgut beladenen Kuben werden geschüttelt, um auf dieser Basis das elektrostatische Verhalten des jeweiligen Saatguts zu ermitteln. Darüber hinaus wird auch das Rieselverhalten durch Ausschütten der Körner aus dem jeweiligen Kubus sowie die Dosierbarkeit bzw. Vereinzelung der jeweiligen Saatkörner durch manuelle Trennung bzw. Vereinzelung der ausgeschütteten Saatkörner mittels eines Kunststoffspatels untersucht. Die diesbezüglichen Ergebnisse werden im Schulnotensystem dargestellt (1 = sehr gut, d. h. keine Anhaftung vom Saatgut an der Kubuswandung bzw. sehr gutes Rieselverhalten und sehr gute Dosierbarkeit bzw. Vereinzelung; 6 = ungenügend, d. h. sehr stark ausgeprägte Anhaftung des Saatguts an der Kubuswandung sowie schlechtes Rieselverhalten bzw. unzureichende Dosierbarkeit bzw. Vereinzelung). Die ermittelten Ergebnisse sind nachfolgend tabellarisch aufgeführt.

| | Beispiel 1 | Beispiel 2 | Beispiel 3 | Beispiel 4 | Beispiel 5 |
|---|---|---|---|---|---|
| Haftverhalten | 1-2 | 1 | 1-2 | 5 | 6 |
| Rieselfähigkeit | 1 | 1 | 1-2 | 4 | 6 |
| Vereinzelung bzw. Dosierbarkeit | 1-2 | 1 | 1-2 | 4 | 6 |

Die zuvor angeführten Ergebnisse zeigen die herausragenden Eigenschaften des mit der erfindungsgemäßen Beschichtungszusammensetzung ausgerüsteten Saatguts gegenüber vergleichbaren Systemen auf Basis nichtleitfähiger Beschichtungen bzw. im Vergleich zu unbeschichtetem Saatgut.

In einem weiteren Untersuchungskomplex wird zudem die Lagerstabilität der jeweiligen Saatgute gemäß den Beispielen 1 bis 5 untersucht. Hierzu werden die jeweiligen Proben für einen Zeitraum von 12 Wochen bei einer Temperatur von 20 °C und einer relativen Luftfeuchtigkeit von 50 % gelagert. Anschließend wird für sämtliche Proben die Keimfähigkeit bestimmt. Während bei den beschichteten Proben auf Basis der Beispiele 1 bis 4 die Keimfähigkeit vollständig erhalten bleibt, ist bei dem unbeschichteten Saatgut gemäß Beispiel 5 eine Verringerung der Keimfähigkeit von nahezu 50 % zu beobachten.

Die vorangehenden Untersuchungen belegen somit insgesamt die positiven Eigenschaften von mit der erfindungsgemäßen Saatgut-Beschichtungszusammensetzung ausgerüstetem Saatgut im Vergleich zu Saatgut mit nicht leitfähigen Beschichtungen bzw. unbeschichtetem Saatgut.

## Patentansprüche

1. Saatgut-Beschichtungszusammensetzung, insbesondere zur Ausrüstung von Saatgut, vorzugsweise Saatgut in Form von Saatkörnern oder dergleichen, mit mindestens einer antistatischen und/oder elektrisch leitfähigen und/oder elektrodissipativen Beschichtung,
wobei die Beschichtungszusammensetzung mindestens ein zumindest im Wesentlichen metallfreies, vorzugsweise metallfreies, elektrisch leitfähiges Additiv aufweist.

2. Beschichtungszusammensetzung nach Anspruch 1,
wobei das leitfähige Additiv salzfrei, insbesondere ammoniumsalzfrei, und/oder nicht hygroskopisch und/oder frei von Aminogruppen und/oder frei von Ethergruppen ausgebildet ist; und/oder
wobei das leitfähige Additiv ein elektrisch leitfähiges Kohlenstoffallotrop und/oder ein elektrisch leitfähiges Polymer ist; und/oder
wobei das leitfähige Additiv, insbesondere das leitfähige Kohlenstoffallotrop und/oder das leitfähige Polymer, konjugierte Aromatensysteme und/oder konjugierte Doppelbindungen und/oder konjugierte π-Elektronensysteme aufweist; und/oder
wobei das leitfähige Additiv, insbesondere das leitfähige Kohlenstoffallotrop und/oder das leitfähige Polymer, vorzugsweise elektrisch leitfähige Aggregate und/oder elektrisch leitfähige Netzwerke auszubilden imstande ist; und/oder
wobei das leitfähige Additiv, insbesondere das leitfähige Kohlenstoffallotrop und/oder das leitfähige Polymer, eine elektrische Leitfähigkeit und/oder Konduktivität im Bereich von 10⁻¹³ bis 10⁵ S/cm, insbesondere 10⁻¹² bis 10⁴ S/cm, vorzugsweise 10⁻¹⁰ bis 10³ S/cm, aufweist; und/oder
wobei das leitfähige Additiv, insbesondere das leitfähige Kohlenstoffallotrop und/oder das leitfähige Polymer, vorzugsweise das leitfähige Kohlenstoffallotrop, partikel- und/oder teilchenförmig ausgebildet ist, insbesondere wobei das leitfähige Additiv gekörnt, kugelförmig, gestreckt, plattenförmig, schuppenförmig, zylinderförmig, kegelförmig oder kegelstumpfförmig ausgebildet ist; und/oder
wobei das leitfähige Additiv, insbesondere das leitfähige Kohlenstoffallotrop und/oder das leitfähige Polymer, vorzugsweise das leitfähige Kohlenstoffallotrop, eine mittlere Teilchengröße, insbesondere eine mittlere Teilchengröße D50, im Bereich von 0,05 nm bis 1.000 µm, insbesondere 0,1 nm bis 800 µm, vorzugsweise 1 nm bis 600 µm, bevorzugt 10 nm bis 500 µm, aufweist.

3. Beschichtungszusammensetzung nach Anspruch 2,
wobei das leitfähige Kohlenstoffallotrop partikel- und/oder teilchenförmig ausgebildet ist; und/oder
wobei das leitfähige Kohlenstoffallotrop, insbesondere bezogen auf die einzelnen Partikel und/oder Teilchen, gekörnt, kugelförmig, gestreckt, plattenförmig, schuppenförmig, zylinderförmig, kegelförmig oder kegelstumpfförmig ausgebildet ist; und/oder
wobei das leitfähige Kohlenstoffallotrop eine mittlere Teilchengröße, insbesondere eine mittlere Teilchengröße D50, im Bereich von 0,05 nm bis 1.000 µm, insbesondere 0,1 nm bis 800 µm, vorzugsweise 1 nm bis 600 µm, bevorzugt 10 nm bis 500 µm, aufweist; und/oder
wobei das leitfähige Kohlenstoffallotrop, bezogen auf die einzelnen Partikel und/oder Teilchen des Kohlenstoffallotrops, ein Aspektverhältnis, berechnet als Verhältnis der Breite zur Höhe der Partikel und/oder Teilchen, im Bereich von 1 bis 10.000, insbesondere größer als 1, vorzugsweise größer als 10, bevorzugt größer als 100, aufweist; und/oder
wobei das Kohlenstoffallotrop ausgewählt ist aus der Gruppe von
(i) gegebenenfalls modifizierten Graphiten, insbesondere zumindest teilweise oxidierten und/oder vollständig oder teilweise interkalierten Graphiten und Blähgraphiten;
(ii) gegebenenfalls modifizierten Graphenen, insbesondere einlagigen oder mehrlagigen Graphenen *(Few Layer Graphenes),* Graphenbändern und dotierten Graphenen;
(iii) Fullerenen, insbesondere C₆₀-Fulleren, C₇₀-Fulleren, C₇₆-Fulleren, C₈₀-Fulleren, C₈₂-Fulleren, C₈₄-Fulleren, C₈₆-Fulleren, C₉₀-Fulleren und C₉₄-Fulleren, vorzugsweise C₆₀-Fulleren und C₇₀-Fulleren;
(iv) gegebenenfalls modifizierten Kohlenstoffnanoröhren (CNTs), insbesondere dotierten und/oder funktionalisierten Kohlenstoffnanoröhren, einwandigen Kohlenstoffnanoröhren (SWCNTs), mehrwandigen Kohlenstoffnanoröhren (MWCNTs), Kohlenstoffnanoröhren mit Bambusstruktur und *cup-stacked* Kohlenstoffnanoröhren (CSCNTs);
(v) Leitrußen (*Carbon Black),* insbesondere *Conductive Carbon Black;*
(vi) Kohlenstofffasern;
(vii) gegebenenfalls modifizierten *Carbon Nanohorns* (CNHs), insbesondere einwandigen, doppelwandigen und mehrwandigen *Carbon Nanohorns;*
(viii) *Carbon Nanocones* (CNCs);
(ix) *Onion-Like Carbons* (OLCs); und
deren Kombinationen oder Mischungen; und/oder wobei als leitfähiges Kohlenstoffallotrop Graphite, Graphene, Fullerene,
Kohlenstoffnanoröhren (CNTs) und/oder Leitruße eingesetzt sind und/oder wobei als leitfähiges Kohlenstoffallotrop Kohlenstoffnanoröhren (CNTs) und/oder Leitruße eingesetzt sind.

4. Beschichtungszusammensetzung nach Anspruch 3,
wobei (i) die gegebenenfalls modifizierten Graphite eine mittlere Teilchengröße, insbesondere eine mittlere Teilchengröße D50, bezogen auf die Breite der einzelnen Graphitpartikel, im Bereich von 0,01 µm bis 100 µm, insbesondere 0,1 µm bis 50 µm, vorzugsweise 1 µm bis 30 µm, aufweisen; und/oder
wobei (i) die gegebenenfalls modifizierten Graphite eine mittlere Teilchengröße, insbesondere eine mittlere Teilchengröße D50, bezogen auf die Höhe der einzelnen Graphitpartikel, im Bereich von 0,5 nm bis 1.000 nm, insbesondere 1 nm bis 500 nm, vorzugsweise 5 nm bis 100 nm, aufweisen: und/oder
wobei (i) die gegebenenfalls modifizierten Graphite eine spezifische Oberfläche (BET-Oberfläche) im Bereich von 10 m²/g bis 2.000 m²/g, insbesondere 15 m²/g bis 1.800 m²/g, vorzugsweise 20 m²/g bis 1.700 m²/g, bevorzugt 50 m²/g bis 1.600 m²/g, aufweisen; und/oder
wobei (ii) die gegebenenfalls modifizierten Graphene in Form von mehrlagigen Graphenen eingesetzt sind und/oder wobei die Graphene bis zu 100 Lagen, insbesondere 1 bis 100 Lagen, vorzugsweise 1 bis 50 Lagen, bevorzugt 1 bis 30 Lagen, besonders bevorzugt 1 bis 20 Lagen, ganz besonders bevorzugt 1 bis 10 Lagen, aufweisen; und/oder
wobei (iii) die Fullerene einen Teilchendurchmesser im Bereich von 7 Å bis 15 Å aufweisen; und/oder
wobei (iv) die eingesetzten Kohlenstoffnanoröhren (CNTs) in Form von einwandigen Kohlenstoffnanoröhren (SWCNTs) und/oder mehrwandigen Kohlenstoffnanoröhren (MWNTs) eingesetzt sind, insbesondere wobei die mehrwandigen Kohlenstoffnanoröhren (MWNTs) ausgewählt sind aus 2- bis 30-wandigen, vorzugsweise 3- bis 15-wandigen Kohlenstoffnanoröhren; und/oder
wobei (iv) die eingesetzten Kohlenstoffnanoröhren (CNTs) mittlere Innendurchmesser im Bereich von 0,4 bis 50 nm, insbesondere im Bereich von 1 bis 10 nm, vorzugsweise im Bereich von 2 bis 6 nm, aufweisen; und/oder
wobei (iv) die eingesetzten Kohlenstoffnanoröhren (CNTs) mittlere Außendurchmesser im Bereich von 1 bis 60 nm, insbesondere im Bereich von 5 bis 30 nm, vorzugsweise im Bereich von 10 bis 20 nm, aufweisen; und/oder
wobei (iv) die eingesetzten Kohlenstoffnanoröhren (CNTs) mittlere Längen im Bereich von 0,01 bis 1.000 µm, insbesondere im Bereich von 0,1 bis 500 µm, vorzugsweise im Bereich von 0,5 bis 200 µm, besonders bevorzugt im Bereich von 1 bis 100 µm, aufweisen; und/oder
wobei (iv) die eingesetzten Kohlenstoffnanoröhren (CNTs) eine spezifische elektrische Leitfähigkeit von mindestens 10³ S/cm, insbesondere mindestens 0,5·10⁴ S/cm, bevorzugt mindestens 10⁴ S/cm, aufweisen; und/oder
wobei (v) die Leitruße *(Carbon Black),* insbesondere die Primärpartikel des Leitrußes, eine mittlere Teilchengröße, insbesondere eine mittlere Teilchengröße D50, im Bereich von 1 nm bis 1.000 nm, insbesondere 10 nm bis 800 nm, vorzugsweise 50 nm bis 500 nm, aufweisen; und/oder
wobei (v) die Leitruße *(Carbon Black)* eine spezifische Oberfläche (BET-Oberfläche) im Bereich von 10 m²/g bis 2.000 m²/g, insbesondere 15 m²/g bis 1.800 m²/g, vorzugsweise 20 m²/g bis 1.700 m²/g, bevorzugt 50 m²/g bis 1.600 m²/g, aufweisen; und/oder
wobei (v) die Leitruße *(Carbon Black)* eine Ölabsorption im Bereich von 10 bis 500 ml/100 g, insbesondere 15 bis 450 ml/100 g, vorzugsweise 20 bis 400 ml/100 g, aufweisen; und/oder
wobei (vi) die Kohlenstofffasern einen mittleren Faserdurchmesser, insbesondere einen mittleren Faserdurchmesser D50 im Bereich von 1 µm bis 20 µm, insbesondere 2 µm bis 15 µm, vorzugsweise 3 µm bis 10 µm, aufweisen; und/oder
wobei (vi) die Kohlenstofffasern eine mittlere Faserlänge, insbesondere eine mittlere Faserlänge D50 im Bereich von 20 µm bis 500 µm, insbesondere 30 µm bis 400 µm, vorzugsweise 50 µm bis 300 µm, aufweisen; und/oder
wobei (vi) die Kohlenstofffasern einen spezifischen elektrischen Widerstand p im Bereich von 10⁻³ Ω·m bis 10⁻⁷ Ω·m, insbesondere 10⁻⁴ Ω·m bis 10⁻⁶ Ω·m, aufweisen; und/oder
wobei (vii) die *Carbon Nanohorns* (CNHs) mittlere Längen im Bereich von 10 bis 100 nm, insbesondere im Bereich von 20 bis 80 nm, vorzugsweise im Bereich von 40 bis 50 nm, aufweisen; und/oder
wobei (vii) die *Carbon Nanohorns* (CNHs) mittlere Durchmesser im Bereich von 0,5 bis 10 nm, insbesondere im Bereich von 1 bis 8 nm, vorzugsweise im Bereich von 1,5 bis 5 nm, besonders bevorzugt im Bereich von 2 bis 3 nm, aufweisen; und/oder
wobei (vii) die *Carbon Nanohorns* (CNHs) eine spezifische Oberfläche (BET-Oberfläche) im Bereich von 10 m²/g bis 1.500 m²/g, insbesondere 15 m²/g bis 1.000 m²/g, vorzugsweise 20 m²/g bis 800 m²/g, bevorzugt 50 m²/g bis 500 m²/g, aufweisen; und/oder
wobei (viii) die *Carbon Nanocones* (CNCs) eine zumindest im Wesentlichen konische Form aufweisen und/oder kegelförmig sind, insbesondere wobei das Verhältnis des Grundflächendurchmessers zur Höhe der *Carbon Nanocones* (CNCs) im Bereich von 1 liegt; und/oder
wobei (ix) die *Onion-Like Carbons* (OLCs) zumindest im Wesentlichen kugelförmig sind und/oder wobei (ix) die *Onion-Like Carbons* (OLCs) mittlere Teilchengrößen, insbesondere mittlere Teilchengrößen D50, im Bereich von 5 nm bis 50 nm, insbesondere 5 nm bis 30 nm, vorzugsweise 10 nm bis 20 nm, aufweisen.

5. Beschichtungszusammensetzung nach Anspruch 2, wobei das leitfähige Polymer ausgewählt ist aus der Gruppe von Polyacetylenen, Polyanilinen, Polyparaphenylenen, Polystyrolen, Polythiophenen, Polyethylendioxythiophenen (PEDOT), Polyethylendioxythiophenen : Polystyrolsulfonaten (PEDOT : PSS) und Polyphenylenvinylenen, insbesondere Polyacetylenen, Polyanilinen, Polyparaphenylenen, Polystyrolen und Polythiophenen.

6. Beschichtungszusammensetzung nach einem der vorangehenden Ansprüche,
wobei die Beschichtungszusammensetzung das leitfähige Additiv, insbesondere das elektrisch leitfähige Kohlenstoffallotrop und/oder das elektrisch leitfähige Polymer, in Mengen im Bereich von 0,0001 Gew.-% bis 70 Gew.-%, insbesondere 0,001 Gew.-% bis 60 Gew.-%, vorzugsweise 0,01 Gew.-% bis 50 Gew.-%, bevorzugt 0,1 Gew.-% bis 40 Gew.-%, besonders bevorzugt 0,2 Gew.-% bis 20 Gew.-%, ganz besonders bevorzugt 0,5 Gew.-% bis 15 Gew.-%, noch weiter bevorzugt 1 Gew.-% bis 10 Gew.-%, bezogen auf die Zusammensetzung, aufweist; und/oder
wobei die Beschichtungszusammensetzung als Dispersion, vorzugsweise als wässrige und/oder wässrig basierte Dispersion, und/oder als Solubilisat, insbesondere wässriges und/oder wässrig basiertes Solubilisat, vorliegt, insbesondere wobei das leitfähige Additiv, insbesondere das elektrisch leitfähige Kohlenstoffallotrop und/oder das elektrisch leitfähige Polymer, in eine kontinuierliche Phase und/oder in mindestens ein Trägermedium, insbesondere Dispersionsmittel und/oder Solubilisierungsmittel, eingebracht ist; und/oder
wobei die Beschichtungszusammensetzung als Dispersion, vorzugsweise als wässrige und/oder wässrig basierte Dispersion, ausgebildet ist;
insbesondere wobei als kontinuierliche Phase und/oder Trägermedium, insbesondere als Dispersionsmittel und/oder Solubilisierungsmittel, ein wässrig, organisch oder wässrig-organisch basiertes Trägermedium, insbesondere Dispersionsmittel und/oder Solubilisierungsmittel, bevorzugt ein wässrig oder wässrig organisches Trägermedium, besonders bevorzugt wässrig basiertes Trägermedium, eingesetzt ist und/oder
insbesondere wobei als kontinuierliche Phase und/oder Trägermedium ein unter Dispergier- und/oder Solubulisierungsbedingungen, insbesondere unter Atmosphärendruck (101,325 kPa) und in einem Temperaturbereich von 10 bis 100 °C, vorzugsweise 15 bis 70 °C, im flüssigen Aggregatzustand vorliegendes Trägermedium eingesetzt ist und/oder
insbesondere wobei das Trägermedium, insbesondere das Dispersionsmittel und/oder das Solubilisierungsmittel, ausgewählt ist aus der Gruppe von (i) Wasser; (ii) Alkoholen, insbesondere geradkettigen, verzweigten oder cyclischen, einwertigen oder mehrwertigen Alkoholen; (iii) Etheralkoholen; (iv) Kohlenwasserstoffen; (v) Ethern; (vi) Carbonsäureestern; (vii) Etherestern; (viii) Lactonen; (ix) Weichmachern, insbesondere Phthalaten; (x) Aldehyden und Ketonen; (xi) Säureamiden, (xii) N-Methylpyrrolidon; sowie Kombinationen der vorgenannten Trägermedien und/oder
insbesondere wobei das Trägermedium, insbesondere das Dispersionsmittel und/oder das Solubilisierungsmittel Wasser enthält und/oder wobei das Dispersionsmittel Wasser ist und/oder
insbesondere wobei die Beschichtungszusammensetzung das Trägermedium, insbesondere das Dispersionsmittel und/oder das Solubilisierungsmittel, in Mengen im Bereich von 0,1 Gew.-% bis 99 Gew.-%, insbesondere 1 Gew.-% bis 95 Gew.-%, vorzugsweise 5 Gew.-% bis 90 Gew.-%, bevorzugt 10 Gew.-% bis 80 Gew.-%, besonders bevorzugt 20 Gew.-% bis 60 Gew.-%, bezogen auf die Zusammensetzung, enthält und/oder
insbesondere wobei die Beschichtungszusammensetzung das Trägermedium, insbesondere das Dispersionsmittel und/oder das Solubilisierungsmittel, in Mengen im Bereich von 10 Gew.-% bis 1.000 Gew.-%, insbesondere 25 Gew.-% bis 500 Gew.-%, vorzugsweise 50 Gew.-% bis 400 Gew.- %, bevorzugt 75 Gew.-% bis 350 Gew.-%, besonders bevorzugt 100 Gew.-% bis 300 Gew.-%, ganz besonders bevorzugt 150 Gew.-% bis 250 Gew.-%, bezogen auf das leitfähige Additiv, insbesondere das elektrisch leitfähige Kohlenstoffallotrop und/oder das elektrisch leitfähige Polymer, enthält; und/oder
wobei die Beschichtungszusammensetzung mindestens ein Dispergiermittel und/oder Netzmittel, insbesondere ein polymeres Dispergiermittel und/oder Netzmittel, vorzugsweise auf Basis eines funktionalisierten Polymers, vorzugsweise mit einer zahlenmittleren Molekularmasse von mindestens 500 g/mol, vorzugsweise mindestens 1.000 g/mol, bevorzugt mindestens 2.000 g/mol, enthält, insbesondere wobei das Dispergiermittel ausgewählt ist aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder versalzten Polyaminen, Phosphorsäureestern, Ethoxylaten, Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen Polyestern, Polyphosphaten sowie deren Kombinationen,
insbesondere wobei die Beschichtungszusammensetzung das Dispergiermittel und/oder Netzmittel in Mengen im Bereich von 0,1 Gew.-% bis 50 Gew.-%, insbesondere 0,5 Gew.-% bis 40 Gew.-%, vorzugsweise 1 Gew.-% bis 30 Gew.-%, bevorzugt 2 Gew.-% bis 10 Gew.-%, bezogen auf die Zusammensetzung, enthält.

7. Beschichtungszusammensetzung nach einem der vorangehenden Ansprüche,
wobei die Beschichtungszusammensetzung mindestens eine Matrix-und/oder Gerüstsubstanz aufweist, insbesondere wobei die Matrix-und/oder Gerüstsubstanz ausgewählt ist aus der Gruppe von natürlichen, naturidentischen und künstlichen Polymeren, vorzugsweise wasserlöslichen und/oder in Wasser dispergierbaren Polymeren, und/oder insbesondere wobei die Matrix- und/oder Gerüstsubstanz ausgewählt ist aus der Gruppe von Methylcellulose, Carboxymethylcellullose, Hydroxypropylcellulose, Alginat, Gelatine, Casein, Polyurethanen, Polyacrylaten, Polyacrylamiden, Polyvinylalkoholen, Polyvinylacetaten, Polyvinylpyrrolidonen und Wachsen, insbesondere Bienenwachs, Carnaubawachs, Polyethylenwachs und Polypropylenwachs, sowie deren Kombinationen,
insbesondere wobei die Beschichtungszusammensetzung die Matrix-und/oder Gerüstsubstanz in Mengen im Bereich von 0,5 Gew.-% bis 70 Gew.-%, insbesondere 1 Gew.-% bis 60 Gew.-%, vorzugsweise 2 Gew.-% bis 50 Gew.-%, bevorzugt 5 Gew.-% bis 20 Gew.-%, bezogen auf die Zusammensetzung, enthält; und/oder
wobei die Beschichtungszusammensetzung mindestens ein Verdickungsmittel und/oder ein die Viskosität erhöhendes Mittel aufweist, insbesondere wobei das Verdickungsmittel und/oder das die Viskosität erhöhende Mittel ausgewählt ist aus der Gruppe von Pektinen, Alginaten, Tragacanth, Gummi arabicum, Guargummi, Carrageen, Carboyxmethylcellulose, Carboxypropylcellulose, Polyacrylaten, Polysacchariden, Harnstoffderivaten und Tonen, insbesondere Bentonittonen, sowie deren Kombinationen,
insbesondere wobei die Beschichtungszusammensetzung das Verdickungsmittel und/oder das die Viskosität erhöhende Mittel in Mengen im Bereich von 0,001 Gew.-% bis 25 Gew.-%, insbesondere 0,01 Gew.-% bis 10 Gew.-%, vorzugsweise 0,05 Gew.-% bis 5 Gew.-%, bevorzugt 0,1 Gew.-% bis 4 Gew.-%, besonders bevorzugt 0,5 Gew.-% bis 2 Gew.-%, bezogen auf die Zusammensetzung, enthält; und/oder
wobei die Beschichtungszusammensetzung mindestens einen Entschäumer aufweist, insbesondere wobei der Entschäumer ausgewählt ist aus der Gruppe von Polyethern, Polyacrylaten, Glycerin, Polyethylenglykol und Polysiloxanen sowie deren Kombinationen,
insbesondere wobei die Beschichtungszusammensetzung den Entschäumer in Mengen im Bereich von 0,001 Gew.-% bis 3 Gew.-%, insbesondere 0,01 Gew.-% bis 2 Gew.-%, vorzugsweise 0,1 Gew.-% bis 1 Gew.-%, bevorzugt 0,2 Gew.-% bis 1 Gew.-%, bezogen auf die Zusammensetzung, enthält; und/oder
wobei die Beschichtungszusammensetzung mindestens ein Granulierhilfsmittel enthält, insbesondere wobei das Granulierhilfsmittel ein Wachs, insbesondere Bienenwachs, Carnaubawachs, Polyethylenwachs und/oder Polypropylenwachs, ist; und/oder
wobei die Beschichtungszusammensetzung mindestens einen Pelletbildner enthält, insbesondere wobei der Pelletbildner Torf, Ton und/oder Stärke ist; und/oder
wobei die Beschichtungszusammensetzung mindestens ein weiteres Additiv und/oder mindestens einen weiteren Inhaltsstoff enthält, insbesondere wobei das weitere Additiv und/oder der weitere Inhaltsstoff ausgewählt ist aus der Gruppe von Füllstoffen, insbesondere Carbonaten, vorzugsweise Calciumcarbonat; Granulatbildnern; Haftvermittlern; Rheologiestellmitteln; pH-Stellmitteln; Antiblock- und/oder Antihaftmitteln, insbesondere Wachsen; Weichmachern; UV-Adsorbern; Verlaufsmitteln; Farbstoffen und Farbpigmenten; und deren Kombinationen,
insbesondere wobei die Beschichtungszusammensetzung das weitere Additiv und/oder den weiteren Inhaltsstoff in Mengen im Bereich von 0,0001 Gew.-% bis 40 Gew.-%, insbesondere 0,001 Gew.-% bis 30 Gew.-%, vorzugsweise 0,01 Gew.-% bis 20 Gew.-%, bevorzugt 0,1 Gew.-% bis 15 Gew.-%, bezogen auf die Zusammensetzung, enthält; und/oder
wobei die Beschichtungszusammensetzung mindestens einen biologisch aktiven Wirk- und/oder Inhaltsstoff enthält, insbesondere wobei der biologisch aktive Wirk- und/oder Inhaltsstoff ausgewählt ist aus der Gruppe von Bioziden, insbesondere Fungiziden, Herbiziden, Bakteriziden, Insektiziden, Mikrobiziden, Molluskiziden und Viruziden; Düngemitteln; Nährstoffen; Vitaminen; Keim- und/oder Wachstumsregulatoren, insbesondere Hormonen, vorzugsweise Phytohormonen; und deren Kombinationen,
insbesondere wobei die Beschichtungszusammensetzung den biologisch aktiven Wirk- und/oder Inhaltsstoff in Mengen im Bereich von 0,0001 Gew.-% bis 20 Gew.-%, insbesondere 0,001 Gew.-% bis 15 Gew.-%, vorzugsweise 0,01 Gew.-% bis 10 Gew.-%, bevorzugt 0,1 Gew.-% bis 5 Gew.-%, bezogen auf die Zusammensetzung, enthält.

8. Beschichtungszusammensetzung nach einem der vorangehenden Ansprüche, wobei die Beschichtungszusammensetzung zumindest im Wesentlichen metallfrei, insbesondere metallfrei, vorzugsweise schwermetallfrei, oder zumindest metallarm, insbesondere schwermetallarm, ausgebildet ist, insbesondere wobei die Beschichtungszusammensetzung einen Metallgehalt, insbesondere einen Schwermetallgehalt, von höchstens 0,1 Gew.-%, insbesondere höchstens 0,01 Gew.-%, vorzugsweise höchstens 0,001 Gew.-%, bevorzugt höchstens 0,0001 Gew.-%, besonders bevorzugt höchstens 0,00001 Gew.-%, ganz besonders bevorzugt höchstens 0,000001 Gew.-%, bezogen auf die Zusammensetzung, aufweist; und/oder
wobei die Beschichtungszusammensetzung zumindest im Wesentlichen frei von metallhaltigen Pigmenten und/oder metallhaltigen Farbstoffen ist; und/oder
wobei die Beschichtungszusammensetzung insbesondere unter Verarbeitungs- und/oder Anwendungsbedingungen, insbesondere unter Atmosphärendruck (101,325 kPa) und in einem Temperaturbereich von 10 bis 100 °C, vorzugsweise 15 bis 70 °C, eine fließfähige und/oder flüssige Konsistenz aufweist; und/oder
wobei die Beschichtungszusammensetzung insbesondere unter Verarbeitungs- und/oder Anwendungsbedingungen, insbesondere unter Atmosphärendruck (101,325 kPa) und in einem Temperaturbereich von 10 bis 100 °C, vorzugsweise 15 bis 70 °C, eine dynamische Viskosität im Bereich von 10 bis 50.000 mPa·s, insbesondere 25 bis 30.000 mPa·s, vorzugsweise 50 bis 25.000 mPa·s, bevorzugt 75 bis 20.000 mPa·s, aufweist; und/oder
wobei die Beschichtungszusammensetzung im getrockneten und/oder ausgehärteten Zustand eine Gesamtrestfeuchte von 0,001 bis 5 Gew.-%, insbesondere 0,01 bis 3 Gew.-%, vorzugsweise 0,1 bis 2 Gew.-%, bevorzugt 0,5 bis 1 Gew.-%, bezogen auf die Beschichtungszusammensetzung, aufweist; und/oder
wobei die Beschichtungszusammensetzung im getrockneten und/oder ausgehärteten Zustand eine Gesamtrestfeuchte von höchstens 5 Gew.-%, insbesondere höchstens 3 Gew.-%, vorzugsweise höchstens 2 Gew.-%, bevorzugt höchstens 1 Gew.-%, bezogen auf die Beschichtungszusammensetzung, aufweist; und/oder
wobei die Beschichtungszusammensetzung im getrockneten und/oder ausgehärteten Zustand einen spezifischen Oberflächenwiderstand σₛ von höchstens 10¹² Ω/sq, insbesondere höchstens 10¹¹ Ω/sq, vorzugsweise höchstens 10¹⁰ Ω/sq, bevorzugt höchstens 10⁹ Ω/sq, besonders bevorzugt höchstens 10⁸ Ω/sq, aufweist; und/oder
wobei die Beschichtungszusammensetzung im getrockneten und/oder ausgehärteten Zustand einen spezifischen Oberflächenwiderstand σₛ im Bereich von 10⁻³ Ω/sq bis 10¹² Ω/sq, insbesondere im Bereich von 10⁻¹ Ω/sq bis 10¹¹ Ω/sq, vorzugsweise im Bereich von 10⁰ Ω/sq bis 10¹⁰ Ω/sq, bevorzugt im Bereich von 10¹ Ω/sq bis 10⁹ Ω/sq, besonders bevorzugt im Bereich von 10² Ω/sq bis 10⁸ Ω/sq, aufweist; und/oder wobei die Beschichtungszusammensetzung im getrockneten und/oder ausgehärteten Zustand einen spezifischen Widerstand ρₛ und/oder eine Resistivität von höchstens 10¹⁰ Ω·m, insbesondere höchstens 10⁵ Ω·m, vorzugsweise höchstens 10³ Ω·m, aufweist; und/oder wobei die Beschichtungszusammensetzung im getrockneten und/oder ausgehärteten Zustand einen spezifischen Widerstand ρₛ und/oder eine Resistivität im Bereich von 10⁻⁷ Ω·m bis 10¹⁰ Ω·m, insbesondere im Bereich von 10⁻⁶ Ω·m bis 10⁵ Ω·m, vorzugsweise im Bereich von 10⁻⁵ Ω·m bis 10³ Ω·m, aufweist.

9. Verwendung mindestens eines zumindest im Wesentlichen metallfreien, vorzugsweise metallfreien, elektrisch leitfähigen Additivs, insbesondere eines elektrisch leitfähigen Kohlenstoffallotrops und/oder eines elektrisch leitfähigen Polymers, vorzugsweise wie in einem der Ansprüche 1 bis 6 definiert,
zur Herstellung einer antistatischen und/oder elektrisch leitfähigen und/oder elektrodissipativen Saatgut-Beschichtungszusammensetzung und/oder Saatgut-Beschichtung und/oder
zur antistatischen und/oder elektrisch leitfähigen und/oder elektrodissipativen Ausrüstung von Saatgut, insbesondere einer Saatgut-Beschichtung.

10. Verwendung einer Beschichtungszusammensetzung zur antistatischen und/oder elektrisch leitfähigen und/oder elektrodissipativen Ausrüstung von Saatgut, wobei die Beschichtungszusammensetzung mindestens ein zumindest im Wesentlichen metallfreies, vorzugsweise metallfreies, elektrisch leitfähiges Additiv, insbesondere ein elektrisch leitfähiges Kohlenstoffallotrop und/oder ein elektrisch leitfähiges Polymers, vorzugsweise wie in einem der Ansprüche 1 bis 6 definiert, aufweist.

11. Verfahren zur Herstellung einer antistatischen und/oder elektrisch leitfähigen und/oder elektrodissipativen Saatgut-Beschichtungszusammensetzung, insbesondere zur Ausrüstung von Saatgut, wobei mindestens ein zumindest im Wesentlichen metallfreies, vorzugsweise metallfreies, elektrisch leitfähiges Additiv, insbesondere ein elektrisch leitfähiges Kohlenstoffallotrop und/oder ein elektrisch leitfähiges Polymer, vorzugsweise wie in einem der Ansprüche 1 bis 6 definiert, in einer kontinuierlichen Phase und/oder einem Trägermedium, insbesondere Dispersionsmittel und/oder Solubilisierungsmittel, vorzugsweise in Gegenwart mindestens eines Dispergiermittels und/oder Netzmittels, unter Einbringung eines für die Dispergierung ausreichenden Energieeintrags dispergiert wird.

12. Saatgut-Beschichtungszusammensetzung, insbesondere zur antistatischen und/oder elektrisch leitfähigen und/oder elektrodissipativen Ausrüstung von Saatgut, wobei die Saatgut-Beschichtungszusammensetzung erhältlich ist durch das Verfahren nach Anspruch 11.

13. Verfahren zur Herstellung eines mit einer Beschichtung ausgerüsteten Saatguts, vorzugsweise eines Saatguts in Form von Saatkörnern oder dergleichen, mit antistatischen und/oder elektrisch leitfähigen und/oder elektrodissipativen Eigenschaften, wobei das Saatgut mit einer Saatgut-Beschichtungszusammensetzung, wie in einem der Ansprüche 1 bis 8 und/oder in Anspruch 12 definiert, ausgerüstet und/oder insbesondere beschichtet wird,
insbesondere wobei die Beschichtung durch Inkontaktbringen, insbesondere Auftragen und/oder Aufsprühen, der Saatgut-Beschichtungszusammensetzung auf das Saatgut, insbesondere gefolgt von einem Trocknen und/oder Aushärten der Saatgut-Beschichtungszusammensetzung, erhalten wird.

14. Saatgut, insbesondere Saatgut in Form von Saatkörnern oder dergleichen, wobei das Saatgut mit mindestens einer antistatischen und/oder elektrisch leitfähigen und/oder elektrodissipativen Beschichtung ausgerüstet ist, wobei die Beschichtung eine Saatgut-Beschichtungszusammensetzung, insbesondere wie in einem der Ansprüche 1 bis 8 und/oder in Anspruch 12 definiert, aufweist oder hieraus besteht.

15. Saatgut nach Anspruch 14,
wobei die Beschichtung als äußerste Schicht auf dem Saatgut angeordnet ist und/oder wobei die Beschichtung das Saatgut zumindest im Wesentlichen vollständig umgibt und/oder umhüllt und/oder wobei die Beschichtung zumindest im Wesentlichen kontinuierlich ausgebildet ist; und/oder
wobei die Beschichtung eine Schichtdicke im Bereich von 1 nm bis 5 mm, insbesondere im Bereich von 2 nm bis 4 mm, vorzugsweise im Bereich von 5 nm bis 3 mm, bevorzugt im Bereich von 10 nm bis 2 mm, besonders bevorzugt im Bereich von 100 nm bis 1 mm, ganz besonders bevorzugt im Bereich von 1.000 nm bis 0,5 mm, aufweist; und/oder
wobei die Beschichtung einen spezifischen Oberflächenwiderstand σₛ von höchstens 10¹² Ω/sq, insbesondere höchstens 10¹¹ Q/sq, vorzugsweise höchstens 10¹⁰ Ω/sq, bevorzugt höchstens 10⁹ Ω/sq, besonders bevorzugt höchstens 10⁸ Ω/sq, aufweist; und/oder
wobei die Beschichtung einen spezifischen Oberflächenwiderstand σₛ im Bereich von 10⁻³ Ω/sq bis 10¹² Ω/sq, insbesondere im Bereich von 10⁻¹ Ω/sq bis 10¹¹ Ω/sq, vorzugsweise im Bereich von 10⁰ Ω/sq bis 10¹⁰ Ω/sq, bevorzugt im Bereich von 10¹ Ω/sq bis 10⁹ Ω/sq, besonders bevorzugt im Bereich von 10² Ω/sq bis 10⁸ Ω/sq, aufweist; und/oder
wobei die Beschichtung einen spezifischen Widerstand ρₛ und/oder eine Resistivität von höchstens 10¹⁰ Ω·m, insbesondere höchstens 10⁵ Ω·m, vorzugsweise höchstens 10³ Ω·m, aufweist; und/oder
wobei die Beschichtung im getrockneten und/oder ausgehärteten Zustand einen spezifischen Widerstand ρₛ und/oder eine Resistivität im Bereich von 10⁻⁷ Ω·m bis 10¹⁰ Ω·m, insbesondere im Bereich von 10⁻⁶ Ω·m bis 10⁵ Ω·m, vorzugsweise im Bereich von 10⁻⁵ Ω·m bis 10³ Ω·m, aufweist; und/oder
wobei das Saatgut eine Teilchen- und/oder Korngröße, insbesondere eine mittlere Teilchen- und/oder Korngröße D50, im Bereich von 0,01 mm bis 5 cm, insbesondere im Bereich von 0,05 mm bis 2 cm, vorzugsweise im Bereich von 0,1 mm bis 1 cm, bevorzugt im Bereich von 0,2 mm bis 5 mm, besonders bevorzugt im Bereich von 0,3 mm bis 3 mm, ganz besonders bevorzugt 0,5 mm bis 2 mm, aufweist; und/oder
wobei das Saatgut eine Tausendkornmasse (TKM) im Bereich von 0,01 g bis 1.000 g, insbesondere 0,05 g bis 800 g, vorzugsweise 0,1 g bis 500 g, bevorzugt 0,3 g bis 300 g, besonders bevorzugt 0,5 g bis 100 g, ganz besonders bevorzugt 0,5 g bis 50 g, aufweist; und/oder
wobei das Saatgut ausgewählt ist aus der Gruppe von Gemüsesaatgut, Getreidesaatgut und Zierpflanzensaatgut, insbesondere Blumensaatgut.
